# EUROPEAN PATENT SPECIFICATION

(11) **EP 3 409 471 B1**
(45) Date of publication and mention of the grant of the patent: **02.03.2022**
(21) Application number: 17743559.1
(22) Date of filing: 09.01.2017
(51) Int. Cl.: B32B 27/28, B32B 27/12, B32B 37/06, B32B 37/10, B32B 1/08, B32B 9/00, B32B 9/04, B32B 27/32, B32B 27/34, B32B 27/38, B32B 27/36, B32B 27/42, B32B 7/12, B32B 3/26, C01B 32/158, B32B 7/03

(54) **USE OF CARBON NANOTUBE AGGREGATE IN PREPARING NANOCARBON IMPACT RESISTANT MATERIAL AND METHOD FOR PREPARING NANOCARBON IMPACT RESISTANT MATERIAL**
VERWENDUNG VON KOHLENSTOFFNANORÖHRENAGGREGAT ZUR HERSTELLUNG VON SCHLAGZÄHEM NANOKOHLENSTOFFMATERIAL UND VERFAHREN ZUR HERSTELLUNG VON SCHLAGZÄHEM NANOKOHLENSTOFFMATERIAL
UTILISATION D'AGRÉGAT DE NANOTUBES DE CARBONE DANS LA PRÉPARATION DE MATÉRIAU RÉSISTANT À L'IMPACT EN NANOCARBONE ET PROCÉDÉ POUR PRÉPARER UN MATÉRIAU RÉSISTANT À L'IMPACT EN NANOCARBONE

(30) Priority: 29.01.2016 CN 201610064974; 29.01.2016 CN 201610064733; 29.01.2016 CN 201610064973
(43) Date of publication of application: 05.12.2018
(73) Proprietor: Suzhou Institute of Nano-Tech and Nano-Bionics, Chinese Academy of Sciences, Suzhou, Jiangsu 215123 (CN)
(72) Inventor: HU, Dongmei, Suzhou Jiangsu 215123 (CN); LI, Qingwen, Suzhou Jiangsu 215123 (CN)
(74) Representative: Proi World Intellectual Property GmbH
(86) International application number: PCT/CN2017/070627
(87) International publication number: WO 2017/128944

(56) References cited:
- CN-A- 1 868 608
- CN-A- 101 286 383
- CN-A- 101 870 463
- CN-A- 102 372 252
- CN-A- 102 516 569
- US-A1- 2010 324 656
- US-A1- 2015 033 429
- YANG, MINGBO et al.: "The structure and properties of the material with negative poisson's ratio", POLYMER MATERIALS SCIENCE & ENGINEERING, vol. 17, no. 6, 30 November 2001 (2001-11-30), pages 15-18, 24, XP009512933, ISSN: 1000-7555

## Description

### BACKGROUND OF THE INVENTION

### Technical Field

The application relates to impact-resistant materials, in particular to the application of carbon nanotube assemblies to the preparation of a nanocarbon impact-resistant material such as an explosion-proof material, a bullet-proof material and a stab-proof material, and a preparation method of the nanocarbon impact-resistant material.

### Description of Related Art

Impact-resistant materials including explosion-proof materials, stab-proof materials, bullet-proof materials and the like are widely used in the weapon field, the chemical field, the traffic field, the aerospace field and other fields. Traditional impact-resistant materials mainly include metal materials, high molecular materials, ceramic materials and the like. Although the metal materials have good impact resistance through shape and structure design, the metal materials are bulky in structure and all rigid and consequentially can severely affect the flexibility of individual movement in use. Impact-resistant materials based on high molecular materials are mainly made of ultra-high molecular weight polyethylene (UHMWPE) fibers, polyarmide fibers, PBO fibers and the like. Although compared with the rigid impact-resistant materials made of metal and ceramic, these impact-resistant materials have the advantages of low weight and the like, these impact-resistant materials still have many defects, for example, the UHMWPE fibers are not resistant to heat and have the maximum tolerable temperature below 120°C; the polyarmide fibers are not resistant to ultraviolet light or moisture; and the density of these high molecular materials is still relatively high. Therefore, these materials cannot meet the application requirements in certain fields, for example, when these impact-resistant materials are used as individual protection materials, protection structures formed by these high molecular impact-resistant materials are heavy, thick, poor in wearing comfort and non-breathable and consequentially affect the flexibility of individual movement.

In consideration of the defects of the traditional impact-resistant materials, researchers have put forwards various improvement schemes. For example, the patent with the application No. CN101218480B discloses a fabric matrix formed by a high-tenacity fiber net, wherein a bonding layer and a rubber layer are attached to the matrix once, and a plurality of these units are stacked to form a flexible stab-proof composite material; however, this stab-proof composite material is complex in structure, poor in processability and not suitable for batch preparation. According to the patent with the application No. US2004/0048536A1, a certain quantity of solid hard particulate matter is attached to the surface of high-performance fiber fabric to decrease the penetration depth of cutters. According to the patent with the application No.US20070105471, the surface of aramid fiber is coated with inorganic particles to improve the stab resistance of the material; however, the structure is made harder, and the wearing comfort is decreased. According to the patent with the application No.CN102058188B, nano particles and high-performance fiber fabric are compounded and then compounded with thermoplastic resin, in this way, the impact resistance can be greatly improved, the weight is effectively reduced, and the softness of the material is hardly changed. According to the patent with the application No. CN100567606A, carbon nanotubes are dissolved in adhesives and then smeared on UHMWPE fibers, in this way, the heat resistance, the creep property and the mechanical strength of UHMWPE can be effectively improved. However, due to the immature preparation technique of nanomaterials, in the scheme mentioned above, only a small quantity of nanomaterials can be added into the adhesives on the surfaces of the materials to improve the bullet-proof property, the dispersion uniformity of the nanomaterials in the adhesives and the stacking form and distribution condition of the nanomaterials on the surface of high-performance fibers all have an influence on the bullet-proof property of the materials, but all these factors are hard to control. In addition, the bullet-proof materials prepared through the method are still hard, rigid, high in density and weight, poor in fitness with human bodies and wearing comfort and can still severely affect the movement flexibility of human bodies.

US 2015/033429 A1 relates to ballistic resistant articles comprising one or more woven fabric layers and one or more sheet layers comprising a carbon nanotube-polymer composite.

CN 102 516 569 A relates to a preparation method for carbon nanotube non-woven fabric interlayer modified fiber reinforced composite materials.

### BRIEF SUMMARY OF THE INVENTION

To overcome the defects of the prior art, the application mainly aims to provide the application of carbon nanotube assemblies to the preparation of an impact-resistant material and a preparation method of the impact-resistant material.

According to the technical scheme adopted by the application to achieve the above aim:

One embodiment of the application provides the application of carbon nanotube assemblies to the preparation of a nanocarbon impact-resistant material. The carbon nanotube assembly is a macrostructure provided with at least one continuous surface. A plurality of carbon nanotubes are densely distributed in the continuous surface, and at least partial segments of at least part of the multiple carbon nanotubes continuously extend in the continuous surface. The carbon nanotube assembly comprises a plurality of basic units which are distributed in an oriented mode, and each basic unit comprises a two-dimensional surface structure which is formed by a plurality of interwoven carbon nanotubes, the multiple basic units are densely distributed in at least one continuous surface in parallel, thus the carbon nanotube assembly is in a macro-ordered form, and the multiple carbon nanotubes in each basic unit are interwoven disorderly, thus the carbon nanotube assembly is in a micro-disordered form.

In certain embodiments, graphene materials or other materials can be compounded on the surface and/or the interior of the carbon nanotube assembly.

One embodiment of the application provides a preparation method of the nanocarbon impact-resistant material. The preparation method comprises the steps: providing multiple carbon nanotubes, and closely gathering the multiple carbon nanotubes to form the carbon nanotube assembly, wherein the carbon nanotube assembly is a macrostructure provided with at least one continuous surface, and at least partial segments of at least part of the multiple carbon nanotubes continuously extend in the continuous surface.

In certain embodiments, graphene materials or other materials can be compounded on the surface and/or the interior of the carbon nanotube assembly.

In the embodiment mentioned above, the nanocarbon impact-resistant material formed by the carbon nanotube assembly can absorb a large quantity of impact energy by means of the hollow structure of the carbon nanotubes; when a load is applied to the material, the material absorbs energy through changes of the microstructure between the carbon nanotubes, such as fractures and crushes of the carbon nanotubes, and destroy of the overlap joint between the carbon nanotubes, and thus an excellent protection effect is achieved; and meanwhile, the nanocarbon impact-resistant material has the advantages of being light, good in flexibility, wide in tolerable temperature range (about from the liquid nitrogen temperature to 500°C), capable of being bent freely, good in fitness, breathable, adaptable to heat-moisture balance of human bodies, good in wearing comfort and the like, and can be widely applied to the preparation of bullet-proof materials, stab-proof materials, explosion-proof materials and the like.

Furthermore, one embodiment of the application provides the application of carbon nanotube assemblies to the preparation of a stab-proof composite material. The carbon nanotube assembly comprises a two-dimensional surface macrostructure formed by a plurality of closely-gathered carbon nanotubes.

Furthermore, one embodiment of the application provides a stab-proof composite material comprising:
at least one carbon nanotube assembly, wherein the carbon nanotube assembly comprises a carbon nanotube film formed by a plurality of closely-gathered carbon nanotubes; and
soft base cloth, wherein the surface of at least one side of the soft base cloth is fixedly covered with at least one carbon nanotube film.

Preferably, the carbon nanotube assembly comprises a plurality of basic units which are distributed in an oriented mode, and the multiple basic units are densely distributed in one continuous surface in parallel, so that the carbon nanotube assembly is of a macro-ordered and micro-disordered form, and the continuous surface is a plane or a curved surface. Wherein, each basic unit comprises a two-dimensional surface structure formed by a plurality of disorderly-interwoven carbon nanotubes.

In certain embodiments, a plurality of carbon nanotube continuums are continuously gathered on the continuous surface and then compacted, and then the multiple basic units are formed; and each carbon nanotube continuum is formed by a plurality of disorderly-interwoven carbon nanotubes and is of a closed, semi-closed or open two-dimensional or three-dimensional spatial structure before being compacted.

Furthermore, the carbon nanotube continuums are prepared through the floating catalytic cracking method.

One embodiment of the application further provides a stab-proof structure. The stab-proof structure comprises a plurality of subunits which are arranged in a stacked mode, and each subunit comprises the stab-proof composite material.

One embodiment of the application further provides a preparation method of the stab-proof composite material. The preparation method of the stab-proof composite material comprises the steps:
continuously gathering a plurality of carbon nanotube continuums on one continuous plane or one continuous curved surface and then compacting the carbon nanotube continuums to form a plurality of oriented basic units, and closely arranging the multiple basic units to form the filmy carbon nanotube assembly, wherein each carbon nanotube continuum is formed by a plurality of disorderly-interwoven carbon nanotubes and is of a closed, semi-closed or open two-dimensional or three-dimensional spatial structure before being compacted;
fixedly arranging the carbon nanotube assemblies on the surface of the soft base cloth in a covering mode, so that the stab-proof composite material is formed.

One embodiment of the application further provides another preparation method of the stab-proof composite material. The preparation method of the stab-proof composite material comprises the steps: continuously gathering a plurality of carbon nanotube continuums on the surface of the soft base cloth and then compacting the carbon nanotube continuums to form a plurality of oriented basic units, and densely arranging the multiple basic units to form a filmy carbon nanotube assembly, so that the stab-proof composite material is formed, wherein each carbon nanotube continuum is formed by a plurality of disorderly-interwoven carbon nanotubes and is of a closed, semi-closed or open two-dimensional or three-dimensional spatial structure before being compacted.

In the embodiment mentioned above, the carbon nanotube assembly, particularly the soft carbon nanotube film, is combined with the soft base cloth, and particularly the soft carbon nanotube film is attached to the surface of high-performance fiber fabric to form the stab-proof composite material; the stab-proof composite material can effectively blunt cutter points, decrease the invasion depth of cutters, effectively disperse and absorb the kinetic energy of the cutters, effectively restrain movement of high-performance fibers, and decrease the nonuniformity in the surface of the fiber fabric; and meanwhile, the stab-proof composite material is light in structure and good in flexibility, does not affected the movement of human bodies after being worn, and has excellent environmental tolerability such as the excellent heat resistance, ultraviolet resistance and moisture environment resistance.

Furthermore, one embodiment of the application provides the application the carbon nanotube assemblies in the preparation of a bullet-proof composite material.

Furthermore, one embodiment of the application provides a bullet-proof composite material. The bullet-proof composite material comprises:
at least one carbon nanotube assembly, wherein the carbon nanotube assembly comprises a two-dimensional surface macrostructure formed by a plurality of closely-gathered carbon nanotubes; and
fabric, wherein the surface of at least one side of the fabric is covered with the carbon nanotube assemblies.

In certain embodiments, the carbon nanotube assembly comprises a plurality of basic units which are distributed in an oriented mode, wherein each basic unit comprises a two-dimensional surface structure formed by a plurality of interwoven carbon nanotubes.

In certain embodiments, the multiple basic units are densely arranged in one continuous surface in parallel, so that the carbon nanotube assembly is of a macro-ordered and micro-disordered form.

In certain embodiments, a plurality of carbon nanotube continuums are continuously gathered on the continuous surface and then compacted to form the multiple basic units. Wherein, the carbon nanotube continuums are prepared through the floating catalytic cracking method.

Wherein, the fabric is high-performance fiber fabric preferably.

One embodiment of the application provides a preparation method of the bullet-proof composite material. The preparation method of the bullet-proof composite material comprises the followings steps:
continuously gathering a plurality of carbon nanotube continuums on one continuous surface and then compacting the carbon nanotube continuums to form a plurality of oriented basic units, and closely arranging the multiple basic units to form the carbon nanotube assembly with the two-dimensional surface macrostructure, wherein each carbon nanotube continuum is formed by a plurality of disorderly-interwoven carbon nanotubes and is of a closed, semi-closed or open two-dimensional or three-dimensional spatial structure before being compacted;
fixedly attaching the carbon nanotube assemblies to the surface of the fabric, so that the bullet-proof composite material is formed.

In the embodiment mentioned above, the nanocarbon impact-resistant material mainly formed by the carbon nanotube assemblies is compounded with the fabric and particularly with the high-performance fiber fabric to form the bullet-proof composite material; the bullet-prof composite material can absorb a large quantity of impact energy by means of the hollow structure of the carbon nanotubes; when a load is applied to the material, the material absorbs energy by means of changes of the microstructure between the carbon nanotubes, such as fractures and crushes of the carbon nanotubes and destroy of the overlap joint between the carbon nanotubes, and thus an excellent protection effect is achieved; and meanwhile, the bullet-proof composite material of the application has the characteristics of being soft, small in density (smaller than 1 g/cm³), excellent in bullet-proof performance (efficient bullet deformation and energy absorbability), high in impact resistance, excellent in heat resistance (can be used at the high temperature of 400°C in a short time and can be used at the high temperature of 200°C in a long time), and capable of fitting with any curved surface of human bodies.

### BRIEF DESCRIPTION OF THE SEVERAL VIEWS OF THE DRAWINGS

For a clear illustration of the embodiments of the application or the technical scheme of the prior art, a brief description of the drawings required for the illustration of the embodiments of the application or the technical scheme of the prior art is given as follows. Obviously, the drawings in the following description are only used for certain embodiments of the application, and for those ordinarily skilled in the field, other drawings can also be obtained according to these drawings without creative work.
FIG. 1 is a diagram of the pressing treatment of a nanocarbon film by means of a hot press in one typical embodiment of the application.
FIG. 2 is a picture of a nanocarbon impact-resistant material film in one typical embodiment of the application.
FIG. 3 is a TEM picture of the nanocarbon impact-resistant material film in one typical embodiment of the application.
FIG. 4 is a TEM picture of carbon nanotubes contained in the nanocarbon impact-resistant material film in one typical embodiment of the application.
FIG. 5a is a structural diagram of a nanocarbon impact-resistant material based on orthogonal overlapping in one typical embodiment of the application.
FIG. 5b is a structural diagram of nanocarbon impact-resistant material based on multi-angle overlapping in one typical embodiment of the application.

### DETAILED DESCRIPTION OF THE INVENTION

In one aspect, the embodiment of the application provides the application of carbon nanotube assemblies to the preparation of an impact-resistant material, particularly a nanocarbon impact-resistant material. The carbon nanotube assembly is a macrostructure provided with at least one continuous surface, a plurality of carbon nanotubes are densely distributed in the continuous surface, and at least partial segments of at least part of the multiple carbon nanotubes continuously extend in the continuous surface.

'Dense distribution' mentioned above refers to at least one or the combination of multiple of cross distribution, interwoven distribution, intertwined distribution, parallel distribution or other proper distribution forms.

In certain embodiments, the carbon nanotube assembly is a porous assembly formed by a plurality of closely-gathered carbon nanotubes.

'Close gathering' mentioned above refers to ordered or disordered crossing, disordered interweaving, ordered or disordered intertwining, or other proper gathering forms.

Or in certain embodiments, the carbon nanotube assembly can also comprise a plurality of oriented carbon nanotubes which are densely distributed, for example, the carbon nanotube assembly is composed of a super-aligned carbon nanotube array.

In certain embodiments, the carbon nanotube assembly comprises a two-dimensional surface structure formed by a plurality of densely-gathered carbon nanotubes. For example, the carbon nanotube assembly can be in the form of a carbon nanotube layer or a self-support carbon nanotube film.

In certain embodiments, the carbon nanotube assembly comprises a two-dimensional surface structure formed by a plurality of interwoven carbon nanotubes. Wherein, the interweaving form can be ordered or disordered.

In certain embodiments, the nanocarbon impact-resistant material comprises at least two carbon nanotube assemblies which are arranged in a stacked mode, wherein each carbon nanotube assembly is in the form of a two-dimensional surface macrostructure.

Z The Z carbon nanotube assembly comprises a plurality of basic units which are arranged in an oriented mode, wherein each basic unit comprises a plurality of interwoven carbon nanotubes such as a two-dimensional surface formed by disorderly-interwoven carbon nanotubes.

In certain preferred embodiments, the nanocarbon impact-resistant material comprises at least two carbon nanotube assemblies which are arranged in a stacked mode, wherein at least one carbon nanotube assembly comprises a plurality of basic units which are distributed in an oriented mode in the first direction, the other carbon nanotube assembly comprises a plurality of basic units which are distributed in an oriented mode in the second direction, and the included angle between the first direction and the second direction is 0-180 degrees. Furthermore, the included angle between the first direction and the second direction is not 0 degree or 180 degrees and can be any proper angle within the range of 45-135 degrees.

The multiple basic units are densely distributed in at least one continuous surface in parallel, and thus the carbon nanotube assembly is in a macro-ordered form.

Furthermore, the multiple carbon nanotubes in each basic unit are interwoven disorderly, and thus the carbon nanotube assembly is in a micro-disordered form. The inventor accidentally realizes that compared with nanocarbon impact-resistant materials formed by carbon nanotubes gathered in other modes, the nanocarbon impact-resistant material which is of the special macro-ordered and micro-disordered structure has more advantages in impact resistance and in other aspects. The possible reason for this is that, on the one hand, the nanocarbon impact-resistant material of the special structure can absorb a large quantity of impact energy through the unique structure of the carbon nanotubes, and on the other hand, as compact networks and abundant interfaces are formed between the carbon nanotubes, the carbon nanotubes can be fully matched with one another, and thus the nanocarbon impact-resistant material has excellent impact resistance.

In certain preferred embodiments, each basic unit comprises a two-dimensional surface structure which is formed after carbon nanotube continuums are deposited on at least one continuous surface and compacted, and each carbon nanotube continuum is formed by a plurality of interwoven carbon nanotubes and is of a closed, semi-closed or open two-dimensional or three-dimensional spatial structure before being compacted.

Furthermore, the carbon nanotube continuums are prepared through the chemical vapor deposition method and particularly through the floating catalytic cracking method. In certain embodiments, each carbon nanotube continuum is in the shape of a closed or open cylinder formed by a plurality of disorderly-interwoven carbon nanotubes and has a certain length, and the strip-shaped basic units can be formed after the carbon nanotube continuums are deposited on a certain matrix and compacted.

More specifically, certain existing bibliographies, such as P279, Issue 304, 2004, Science, can serve as references for the production technique of the carbon nanotube continuums. In certain typical cases, a preparation method of the carbon nanotube continuums comprises the following steps:
S1, heating a reaction furnace to the temperature of 1100-1600°C, keeping the temperature stable, and injecting carrier gas into the reaction furnace;
S2, injecting a liquid-phase carbon source into the reaction furnace through a carbon source injection pump, and then the liquid-phase carbon source evenly entering a carbon source injection tube core of a carbon source injection tube after sequentially passing through a carbon source delivery tube and a flow limiting part;
S3, gasifying the liquid-phase carbon source;
S4, forming the carbon nanotube assembly after the gasified carbon source is carried by the carrier gas to reach the high-temperature region of the reaction furnace.

Wherein, the liquid-phase carbon source can be the mixed solution of ethyl alcohol, ferrocene and thiophene, for example, the mass percent of ethyl alcohol is 90-99.9%, the mass percent of ferrocene is 0.1-5%, and the mass percent of thiophene is 0.1-5%. Wherein, the carrier gas is the mixed gas of hydrogen and nitrogen or the mixed gas of hydrogen and inert gas, for example, the volume percent of hydrogen can be 1-100%, the inert gas is argon or helium, and the gas flow of the carrier gas is 1-15L/min.

In certain embodiments, a plurality of carbon nanotube continuums are continuously deposited on at least one continuous surface and then compacted, so that the multiple basic units are formed.

Preferably, the longitudinal peripheries of every two adjacent basic units are spaced from each other by a certain distance, or are next to each other or overlap with each other. Furthermore, the distance between every two adjacent basic units is minimized so that the two adjacent basic units can be better matched with or supported by each other, and accordingly, the reliability and impact strength of the nanocarbon impact-resistant material are further improved.

Furthermore, the continuous surface is a plane or a curved surface.

In certain embodiments, when the nanocarbon impact-resistant material comprises at least two carbon nanotube assemblies (also regarded as carbon nanotube films) which are arranged in a staggered mode and are each of a two-dimensional surface macrostructure, every two adjacent carbon nanotube assemblies can be directly bonded through cold pressing or hot pressing. Wherein, as the carbon nanotubes have the characteristic of large specific surface area, all the carbon nanotube assemblies can be bonded firmly, the environmental weatherability of the nanocarbon impact-resistant material is improved, and certain problems caused by adoption of binding agents are avoided.

Of course, in certain embodiments, when the nanocarbon impact-resistant material comprises at least two carbon nanotube assemblies (also regarded as carbon nanotube films) which are arranged in a staggered mode and are each of a two-dimensional surface macrostructure, a binding material layer can also be arranged between every two adjacent carbon nanotube assemblies.

In certain embodiments, when the nanocarbon impact-resistant material comprises at least two carbon nanotube assemblies (also regarded as carbon nanotube films) which are arranged in a staggered mode and are each of a two-dimensional surface macrostructure, shear thickening fluid can also be injected between every two adjacent carbon nanotube assemblies.

In certain preferred embodiments, graphene is further distributed on the surface and/or the interior of the carbon nanotube assembly.

For example, at least one carbon nanotube in at least one carbon nanotube assembly is covered with a graphene sheet.

Or, for example, at least one graphene sheet is connected between at least two carbon nanotubes in the carbon nanotube assembly in an overlapping mode.

Or, for example, the nanocarbon impact-resistant material further comprises the assembly of a plurality of graphene sheets, and the assembly of the multiple graphene sheets is fixedly connected with at least one carbon nanotube assembly.

Or, for example, at least one carbon nanotube assembly and at least one assembly of multiple graphene sheets are of a two-dimensional surface macrostructure and are arranged in a stacked mode.

In the embodiment mentioned above, the carbon nanotubes and graphene are compounded, and stress waves can be dispersed by means of the structural characteristic of a large graphene sheet layer, so that impact energy borne by the impact-resistant material in unit area is reduced, and accordingly, the protection effect is further improved.

In the embodiment mentioned above, the tube diameter of the carbon nanotubes can be 2nm-100nm, and the carbon nanotubes can be any type or the combinations of multiple types of single-wall carbon nanotubes, double-wall carbon nanotubes and multi-wall carbon nanotubes.

In certain embodiments, when the carbon nanotube assembly is of a two-dimensional surface macrostructure such as a self-support carbon nanotube film, the stress of the carbon nanotube film is equal to or higher than 10MPa, the elongation of the carbon nanotube film is equal to or higher than 2%, the absolute value of the difference between the tensile stress in the length direction and the tensile stress in the width direction is smaller than or equal to 20% of the tensile stress in the length direction or in the width direction, and the absolute value of the difference between the breaking elongation in the length direction and the breaking elongation in the width direction is smaller than or equal to 10% of the breaking elongation in the length direction or in the width direction.

In certain embodiments, the carbon nanotube assembly is provided with a porous structure, the pore diameter of pores of the porous structure is 10nm-200nm, and the porosity of the porous structure is 10%-60%. Due to the existence of the porous structure, the carbon nanotube assembly has good breathability on the premise that the mechanical property of the carbon nanotube assembly is not severely affected.

In certain embodiments, the nanocarbon impact-resistant material is of a soft filmy or sheet structure on the whole.

Furthermore, the thickness of the nanocarbon impact-resistant material is 1-100µm and preferably is 5-15µm.

Furthermore, the surface density of the nanocarbon impact-resistant material is 2-20g/m² and preferably is 5-1 0g/m².

Furthermore, the tensile strength of the nanocarbon impact-resistant material is over 10MPa, and the modulus of the nanocarbon impact-resistant material is over 10GPa.

Furthermore, the tensile strength of the nanocarbon impact-resistant material is over 90Mpa and preferably is over 200MPa, and the modulus of the nanocarbon impact-resistant material is over 30Gpa and preferably is over 60GPa.

Furthermore, the tolerable temperature the nanocarbon impact-resistant material ranges from the liquid nitrogen temperature to 500°C.

In another aspect, the embodiment of the application provides an impact-resistant structure comprising any of the nanocarbon impact-resistant materials mentioned above.

In certain embodiments, the impact-resistant structure further comprises a matrix bonded with the nanocarbon impact-resistant material, wherein the matrix can be hard or soft, and when the impact-resistant structure is used for physical protection, the matrix is preferably a soft breathable matrix.

In another aspect, the embodiment of the application provides a preparation method of the nanocarbon impact-resistant material. The preparation method of the nanocarbon impact-resistant material comprises the steps: providing a plurality of carbon nanotubes, and closely gathering the multiple carbon nanotubes to form the carbon nanotube assembly, wherein the carbon nanotube assembly is of a macrostructure provided with at least one continuous surface, and at least partial segments of at least part of the multiple carbon nanotubes continuously extend in the continuous surface.

In certain embodiments, the preparation method comprises the steps: gathering at least one carbon nanotube continuum on one continuous surface under the effect of the Vander Wale force between the carbon nanotubes, and then compacting the carbon nanotube continuums, so that the carbon nanotube assembly is formed, wherein each carbon nanotube continuum is formed by a plurality of interwoven carbon nanotubes and is of a closed, semi-closed or open two-dimensional or three-dimensional spatial structure before being compacted.

Furthermore, multiple carbon nanotube continuums can be continuously gathered on one continuous surface and then compacted, so that the carbon nanotube assembly comprising a plurality of basic units distributed in an oriented mode is formed, wherein each basic unit comprises a two-dimensional surface structure formed by at least one carbon nanotube continuum.

Furthermore, multiple basic units can be densely arranged in one continuous surface in parallel, so that the carbon nanotube assembly is in a macro-ordered form.

The continuous surface mentioned above can be provided by certain matrixes including, but not limited to, an arc-shaped receiving surface of a roller, a polymer film and fabric. Therefore, the continuous surface can be a plane or a curved surface.

Furthermore, the longitudinal peripheries of every two adjacent basic units can be spaced from each other, or be next to each other or overlap with each other.

Furthermore, each carbon nanotube continuum is formed by a plurality of disorderly-interwoven carbon nanotubes, so that the formed carbon nanotube assembly is in a micro-disordered form.

Furthermore, the carbon nanotube continuums can be prepared through the floating catalytic cracking method.

In certain embodiments, the preparation method can further comprise the steps:
providing at least two carbon nanotube assemblies each of a two-dimensional surface macrostructure;
and arranging the carbon nanotube assemblies in a stacked mode.

Furthermore, at least one of at least two carbon nanotube assemblies comprises a plurality of basic units which are distributed in an oriented mode in the first direction, the other carbon nanotube assembly comprises a plurality of basic units which are distributed in an oriented mode in the second direction, and the included angle between the first direction and the second direction is 0-180 degrees and particularly is 45-135 degrees, for example the included angle preferably is 45 degrees, 90 degrees, 135 degrees and the like.

Furthermore, pressure can be applied to at least two carbon nanotube assemblies to combine the carbon nanotube assemblies into an integrated structure.

Furthermore, at least two carbon nanotube assemblie can be bonded into an integrated structure through binding agents.

Furthermore, the preparation method can further comprise the step: arranging a binding material layer between every two adjacent carbon nanotube assemblies or injecting shear thickening fluid between every two adjacent carbon nanotube assemblies.

Furthermore, the preparation method can comprise the step: completing compaction with or without binding agents and/or solvents. Wherein, the binding agents can be, but are not limited to, the substances mentioned above, and the solvents can be water, organic solvents (such as ethyl alcohol), or certain solutions containing inorganic matter or organic matter.

In certain embodiments, the preparation method can further comprise the step: hot-pressing the carbon nanotube assemblies to further improve the distribution compactness of the carbon nanotubes in the carbon nanotube assemblies.

Furthermore, the carbon nanotube assemblies can be hot-pressed at least through rollers or a plane press or through the rollers as well as the plane press.

Wherein, the hot-pressing temperature preferably can range from the indoor temperature to 300°C, and the hot-pressing pressure preferably can be 2-50Mpa.

In certain preferred embodiments, the preparation method can further comprise the step: covering at least one carbon nanotube in at least one carbon nanotube assembly with graphene.

Furthermore, the preparation method can further comprise the step: bonding graphene with the multiple carbon nanotubes forming the carbon nanotube assemblies through at least one of clading, infiltrating, soaking and spraying in the forming process of the carbon nanotube assemblies or after the carbon nanotube assemblies are formed.

In another aspect, the embodiment of the application provides the application of the carbon nanotube assemblies to the preparation of a stab-proof composite material.

Furthermore, the stab-proof composite material comprises:
at least one carbon nanotube assembly, wherein the carbon nanotube assembly comprises a carbon nanotube film formed by a plurality of closely-gathered carbon nanotubes; and
soft base cloth, wherein the surface of at least one side of the soft base cloth is fixedly coated with at least one carbon nanotube film.

'Close gathering' mentioned here is defined as mentioned above. For example, as one of the feasible schemes, the carbon nanotube assembly can also comprise a plurality of oriented carbon nanotubes which are densely distributed. For example, the carbon nanotube film can be composed of a super-aligned carbon nanotube array.

In certain embodiments, the multiple carbon nanotubes in the carbon nanotube assembly are interwoven to form the carbon nanotube film. Wherein, the interweaving form can be ordered interweaving or disordered.

In certain embodiments, the carbon nanotube assembly can be in the form of a self-support carbon nanotube film.

In certain preferred embodiments, the carbon nanotube assembly comprises a plurality of basic units which are distributed in an oriented mode, wherein each basic unit comprises a two-dimensional surface structure formed by a plurality of interwoven carbon nanotubes.

Furthermore, the multiple basic units are densely distributed in one continuous surface in parallel, so that the carbon nanotube assembly is in a macro-ordered form, and the continuous surface is a plane or a curved surface.

Furthermore, the multiple carbon nanotubes in each basic unit are interwoven disorderly, and thus the carbon nanotube assembly is in a micro-disordered form. The inventor accidentally realizes that compared with nanocarbon impact-resistant materials formed by carbon nanotubes gathered in other modes, the nanocarbon impact-resistant material which is of the special macro-ordered and micro-disordered structure has more advantages in impact resistance and in other aspects. The possible reason for this is that on the one hand, the nanocarbon impact-resistant material of the special structure can absorb a large quantity of impact energy through the unique structure of the carbon nanotubes, and on the other hand, as compact networks and abundant interfaces are formed between the carbon nanotubes, the carbon nanotubes can be fully matched with one another, and thus the nanocarbon impact-resistant material has excellent impact resistance.

In certain preferred embodiments, a plurality of carbon nanotube continuums are deposited on the continuous surface and then compacted, so that the multiple basic units are formed; and each carbon nanotube continuum is formed by a plurality of disorderly-interwoven carbon nanotubes and is of a closed, semi-closed or open two-dimensional or three-dimensional spatial structure before being compacted.

Furthermore, the carbon nanotube continuums are prepared through the chemical vapor deposition method and particularly through the floating catalytic cracking method. In certain embodiments, each carbon nanotube continuum is in the shape of a closed or open cylinder formed by a plurality of disorderly-interwoven carbon nanotubes and has a certain length, and the strip-shaped basic units can be formed after the carbon nanotube continuums are deposited on a certain matrix and compacted.

Wherein, the production technique, mentioned above, of the carbon nanotube continuums can be adopted.

Preferably, the longitudinal peripheries of every two adjacent basic units are spaced from each other by a certain distance, or are next to each other or overlap with each other. Furthermore, the distance between every two adjacent basic units is minimized so that the two adjacent basic units can be better matched with or supported by each other, and accordingly, the reliability and impact strength of the nanocarbon impact-resistant material are further improved.

In certain preferred embodiments, graphene is further distributed on the surface and/or the interior of the carbon nanotube assemblies.

For example, at least one carbon nanotube of at least one carbon nanotube assembly is covered with a graphene sheet.

Or, for example, at least one graphene sheet is connected between at least two carbon nanotubes in the carbon nanotube assembly in an overlapping mode.

Or, for example, the nanocarbon impact-resistant material further comprises the assembly of a plurality of graphene sheets, and the assembly of the multiple graphene sheets is fixedly connected with at least one carbon nanotube assembly.

Or, for example, at least one carbon nanotube assembly and at least one assembly of multiple graphene sheets are of a two-dimensional surface macrostructure and are arranged in a stacked mode.

In the embodiment mentioned above, the carbon nanotubes and graphene are compounded, and stress waves can be dispersed by means of the structural characteristic of a large graphene sheet layer, so that impact energy borne by the impact-resistant material in unit area is reduced, and accordingly, the protection effect is further improved.

In the embodiment mentioned above, the tube diameter of the carbon nanotubes can be 2-100nm, and the carbon nanotubes can be any type or the combinations of multiple types of single-wall carbon nanotubes, double-wall carbon nanotubes and multi-wall carbon nanotubes.

Preferably, the content of the carbon nanotubes in the carbon nanotube assembly is over 99wt%.

In certain embodiments, when the carbon nanotube assembly is of a two-dimensional surface macrostructure such as a self-support carbon nanotube film, the stress of the carbon nanotube film is equal to or higher than 10MPa, the elongation of the carbon nanotube film is equal to or higher than 2%, the absolute value of the difference between the tensile stress in the length direction and the tensile stress in the width direction is smaller than or equal to 20% of the tensile stress in the length direction or the width direction, and the absolute value of the difference between the breaking elongation in the length direction and the breaking elongation in the width direction is smaller than or equal to 10% of the breaking elongation in the length direction or the width direction.

Preferably, the thickness of the carbon nanotube film is smaller than or equal to that of the soft base cloth.

Furthermore, the carbon nanotube assembly is provided with a porous structure, the pore diameter of pores of the porous structure is 10nm-200nm, and the porosity of the porous structure is 10%-60%. Due to the existence of the porous structure, the carbon nanotube assembly has good breathability on the premise that the mechanical property of the carbon nanotube assembly is not severely affected.

Furthermore, the thickness of the carbon nanotube assemblies is 1-100µm and preferably is 5-15µm.

Furthermore, the surface density of the carbon nanotube assemblies is 2-20g/m² and preferably is 5-10g/m².

Furthermore, the tensile strength of the carbon nanotube assemblies is over 10MPa, and the modulus of the carbon nanotube assemblies is over 10GPa.

Furthermore, the tensile strength of the carbon nanotube assemblies is over 90Mpa and preferably is over 200MPa, and the modulus of the carbon nanotube assemblies is over 30Gpa and preferably is over 60GPa.

Furthermore, the tolerable temperature the carbon nanotube assemblies ranges from the liquid nitrogen temperature to 500°C.

Preferably, the strength of high-performance fibers forming the soft base cloth is equal to or higher than 2.0GPa, the modulus of the high-performance fibers is equal to or higher than 80GPa, and the elongation of the high-performance fibers is 3-5%.

Preferably, the soft base cloth is non-woven cloth, and the surface density of the non-woven cloth is 35-180g/m².

In certain embodiments, the base cloth comprises UHMWPE unidirectional cloth or aramid unidirectional cloth.

In certain embodiments, the soft base cloth and the carbon nanotube assemblies are bonded through hot-pressing.

In certain embodiments, the soft base cloth and the carbon nanotube assemblies are bonded through binding agents. Wherein, the binding agents can be, but are not limited to, polyvinyl acetate (PVA) and silicone or polyethylene or polyurethane binding agents.

In certain embodiments, resin films are attached to the surface of the carbon nanotube assembly and/or the surface of the soft base cloth. Wherein, the resin films are made of epoxy, polyethylene or polyester compounds including, but not limited to, polypropylene (PP), polyethylene (PE), polyphenylene sulfide (PPS) and polyvinyl butyral (PVB).

In another aspect, the embodiment of the application provides a stab-proof structure. The stab-proof structure comprises a plurality of subunits which are arranged in a stacked mode, wherein each subunit comprises the stab-proof composite material.

Preferably, the stab-proof structure comprises N subunits, wherein N is an integral multiple of four.

In certain embodiments, in every two adjacent subunits, the basic units of the carbon nanotube assemblies in one subunit are arranged in an oriented mode in the first direction, the basic units of the carbon nanotube assemblies in the other subunit are arranged in an oriented mode in the second direction, the included angle between the first direction and the second direction is 0-180 degrees and preferably is 45-135 degrees.

In another aspect, the embodiment of the application provides a preparation method of the stab-proof composite material. The preparation method comprises the steps:
continuously gathering a plurality of carbon nanotube continuums on one continuous plane or one curved surface and compacting the carbon nanotube continuums to form a plurality of oriented basic units, and densely arranging the multiple basic units to form the filmy carbon nanotube assembly, wherein each carbon nanotube continuum is formed by a plurality of disorderly-interwoven carbon nanotubes and is of a closed, semi-closed or open two-dimensional or three-dimensional spatial structure before being compacted;
fixedly arranging the carbon nanotube assemblies on the surface of the soft base cloth in a covering mode, so that the stab-proof composite material is formed.

The embodiment of the application further provides another preparation method of the stab-proof composite material. The preparation method comprises the steps: continuously gathering a plurality of carbon nanotube continuums on the surface of the soft base cloth and compacting the carbon nanotube continuums to form a plurality of oriented basic units, and densely arranging the multiple basic units to form the filmy carbon nanotube assembly, so that the stab-proof composite material is formed, wherein each carbon nanotube continuum is formed by a plurality of disorderly-interwoven carbon nanotubes and is of a closed, semi-closed or open two-dimensional or three-dimensional spatial structure before being compacted.

In certain embodiments, the carbon nanotube continuums are prepared through the floating catalytic cracking method specifically as mentioned above.

In certain embodiments, the preparation method further comprises the step: hot-pressing the soft base cloth and the carbon nanotube assemblies bonded with the soft base cloth.

In certain embodiments, as for the hot-pressing conditions, the temperature ranges from indoor temperature to 140 °C, the pressure is 1-30MPa, and the time is over 1min.

For example, the hot-pressing process comprises:
the first stage for which the temperature is 110-120°C, the pressure is 1-4MPa and the time is 10-30min;
the second stage for which the temperature is 120-140°C, the pressure is 15-30MPa and the time is 1-3min.

In certain embodiments, as for the hot-pressing conditions, the temperature is the indoor temperature, the pressure is 1-30MPa, and the time is 1-30min.

The stab-proof composite material provided by the above embodiment of the application has the characteristics of being light, thin, excellent in stab resistance and suitable for batch preparation.

In another aspect, the embodiment of the application provides the application of the carbon nanotube assemblies to the preparation of a bullet-proof composite material. Wherein, the carbon nanotube assembly comprises a two-dimensional surface macrostructure formed by a plurality of closely-gathered carbon nanotubes.

Furthermore, the bullet-proof composite material comprises:
at least one carbon nanotube assembly, wherein the carbon nanotube assembly comprises the two-dimensional surface macrostructure formed by a plurality of closely-gathered carbon nanotubes; and
fabric, wherein the surface of at least one side of the fabric is covered with at least one carbon nanotube assembly.

In certain embodiments, the carbon nanotube assembly comprises a two-dimensional surface structure formed by a plurality of interwoven carbon nanotubes, wherein the interweaving form can be ordered or disordered.

In certain preferred embodiments, the carbon nanotube assembly comprises a plurality of basic units which are distributed in an oriented mode, wherein each basic unit comprises a two-dimensional surface structure formed by a plurality of interwoven carbon nanotubes.

Furthermore, the multiple basic units are densely distributed in one continuous surface in parallel, so that the carbon nanotube assembly is in a macro-ordered form.

The continuous surface mentioned above can be provided by certain matrixes including, but not limited to, an arc-shaped receiving surface of a roller, a polymer film and fabric. Therefore, the continuous surface can be a plane or a curved surface.

Furthermore, the multiple carbon nanotubes in each basic unit are interwoven disorderly, and thus the carbon nanotube assembly is in a micro-disordered form. The inventor accidentally realizes that compared with nanocarbon impact-resistant materials formed by carbon nanotubes gathered in other modes, the nanocarbon impact-resistant material which is of the special macro-ordered and micro-disordered structure has more advantages in impact resistance and other aspects. The possible reason for this is that on the one hand, the nanocarbon impact-resistant material of the special structure can absorb a large quantity of impact energy through the unique structure of the carbon nanotubes, and on the other hand, as compact networks and abundant interfaces are formed between the carbon nanotubes, the carbon nanotubes can be fully matched with one another, and thus the nanocarbon impact-resistant material has excellent impact resistance.

In certain preferred embodiments, a plurality of carbon nanotube continuums are deposited on the continuous surface and then compacted, so that the multiple basic units are formed.

Wherein, each carbon nanotube continuum is formed by a plurality of disorderly-interwoven carbon nanotubes and is of a closed, semi-closed or open two-dimensional or three-dimensional spatial structure before being compacted. Furthermore, the carbon nanotube continuums are prepared through the floating catalytic cracking method.

Wherein, certain typical carbon nanotube continuums are each in the shape of an open or closed cylinder formed by multiple disorderly-interwoven carbon nanotubes and have a certain length, and the strip-shaped basic units can be formed after the carbon nanotube continuums are deposited on a certain matrix and compacted.

More specifically, certain existing bibliographies can serve as references for the production technique of the carbon nanotube continuums, for example, the a single layer of multiple layers of carbon nanotube continuums can be grown by means of carbon source gas through catalyst pyrolysis, the carbon nanotube continuums are then gathered on a continuous plane or a curved surface (namely the continuous surface mentioned above) to form the carbon nanotube assembly, and the carbon nanotube assembly can be a self-support or non-self-support carbon nanotube film.

Furthermore, the production technique, mentioned above, of the carbon nanotube continuum can be adopted.

Preferably, the longitudinal peripheries of every two adjacent basic units are spaced from each other by a certain distance, or are next to each other or overlap with each other. Furthermore, the distance between every two adjacent basic units is minimized so that the two adjacent basic units can be better matched with or supported by each other, and accordingly, the reliability and impact strength of the nanocarbon impact-resistant material are further improved.

In certain embodiments, continuous carbon nanotube continuums can be prepared through the technique mentioned above and then are collected in a wound mode to form the carbon nanotube assembly (namely the carbon nanotube film) with the controllable thickness (preferably over 10nm), the carbon nanotube film has the characteristics of being ordered macroscopically (having a high degree of orientation macroscopically) and disordered microcosmically (carbon nanotubes are in overlap joint on the same surface freely), and the thickness of the carbon nanotube film can be controlled from the nanoscale to the millimeter scale.

In certain embodiments, when two or more carbon nanotube continuums are arranged in a stacked mode, every two adjacent carbon nanotube assemblies can be directly bonded together through cold pressing or hot pressing. Wherein, as the carbon nanotubes have the characteristic of large specific surface area, all the carbon nanotube assemblies can be bonded firmly, the environmental weatherability of the carbon nanotube assemblies is improved, and certain problems caused by adoption of binding agents can be avoided.

Furthermore, in certain embodiments, a binding material layer can also be arranged between every two adjacent carbon nanotube assemblies.

Furthermore, in certain embodiments, shear thickening fluid can also be injected between every two adjacent carbon nanotube assemblies.

In certain preferred embodiments, graphene is further distributed on the surface and/or the interior of the carbon nanotube assemblies.

For example, at least one carbon nanotube of at least one carbon nanotube assembly is covered with a graphene sheet.

Or, for example, at least one graphene sheet is connected between at least two carbon nanotubes in the carbon nanotube assembly in an overlapping mode.

Or, for example, the nanocarbon impact-resistant material further comprises the assembly of a plurality of graphene sheets, and the assembly of the multiple graphene sheets is fixedly connected with at least one carbon nanotube assembly.

Or, for example, at least one carbon nanotube assembly and at least one assembly of multiple graphene sheets are of a two-dimensional surface macrostructure and are arranged in a stacked mode.

In the embodiment mentioned above, the carbon nanotubes and graphene are compounded, and stress waves can be dispersed by means of the structural characteristic of a large graphene sheet layer, so that impact energy borne by the impact-resistant material in unit area is reduced, and accordingly, the protection effect is further improved.

In certain embodiments, the thickness of the carbon nanotube continuums is 1-100µm and preferably is 5-15µm.

Furthermore, the surface density of the carbon nanotube continuums is 2-20g/m² and preferably is 5-10g/m².

Furthermore, the tensile strength of the carbon nanotube continuums is over 10MPa, preferably is over 90Mpa and particularly is over 200MPa, and the modulus of the carbon nanotube continuums is over 10GPa, preferably is over 30GPa and particularly is over 60GPa.

Furthermore, the tolerable temperature of the carbon nanotube continuums ranges from the liquid nitrogen temperature to 500°C.

In certain preferred embodiments, the carbon nanotube assembly is a carbon nanotube film, the strength of the carbon nanotube film in the orientation direction of the basic units of the carbon nanotube film is 50MPa-12GPa and preferably is 120MPa-1GPa, and the strength of the carbon nanotube film in the direction perpendicular to the orientation direction of the basic units is 30MPa-10GPa and preferably is 60MPa-800MPa.

In the embodiments mentioned above, the tube diameter of the carbon nanotubes can be 2nm-100nm, and the carbon nanotubes can be any type or the combinations of multiple types of single-wall carbon nanotubes, double-wall carbon nanotubes and multi-wall carbon nanotubes.

In certain embodiments, the carbon nanotube assembly is provided with a porous structure, the pore diameter of pores of the porous structure is 10nm-200nm, and the porosity of the porous structure is 10%-60%. Due to the existence of the porous structure, the carbon nanotube assembly has good breathability on the premise that the mechanical property of the carbon nanotube assembly is not severely affected.

In certain embodiments, the tensile strength of the monofilaments of the fabric is over 22CN/dtex and preferably is over 35CN/dtex.

In certain preferred embodiments, the fabric is high-performance fiber fabric, and the high-performance fiber fabric is non-woven fabric and/or interwoven fabric.

Wherein, the high-performance fibers forming the high-performance fiber fabric can be, but are not limited to, any type or the combination of more than two types of UHMWPE fibers, aramid fibers and poly-p-phenylene ben-zobisthiazole fibers.

Preferably, the surface density of the high-performance fiber fabric is 35-220g/m² and preferably is 120-160g/m².

In certain embodiments, the bullet-proof composite material comprises at least two layers of fabric arranged in a stacked mode and/or at least two carbon nanotube assemblies arranged in a stacked mode, and the carbon nanotube assemblies are filmy.

Furthermore, at least one carbon nanotube assembly is distributed between every two adjacent layers of fabric, and/or at least one layer of fabric is distributed between every two adjacent carbon nanotube assemblies.

In certain embodiments, the two adjacent layers of fabric are both non-woven fabric, and the included angle between the warp orientation direction of one layer of fabric and the warp orientation direction of the other layer of fabric is 0-180 degrees, for example, the included angle can be any proper angle ranging from 45 degrees to 135 degrees.

In certain embodiments, the orientation direction of the basic units in at least one carbon nanotube assembly distributed between the two adjacent layers of fabric is the same as the warp orientation direction of at least one layer of fabric, and the fabric is non-woven fabric.

In certain embodiments, the carbon nanotube assemblies are attached to the surfaces of the two opposite sides of at least one layer of fabric.

In certain embodiments, one layer of fabric is interwoven fabric, and the two filmy carbon nanotube assemblies distributed on the two sides of the fabric are structurally symmetrical.

In certain specific embodiments, if the high-performance fiber fabric is regarded as a structural unit A and the carbon nanotube assembly (particularly the carbon nanotube film) is regarded as a structural unit B.

The high-performance fiber fabric is non-woven fabric
The characteristics of A: multiple layers of non-woven fabric are alternately stacked in a 0/90 mode (as the warp orientations of every two adjacent layers of non-woven fabric are perpendicular, if the warp orientation of one layer of non-woven fabric A₀ is set as 0 degree, the warp orientation of the other layer of non-woven fabric A₉₀ is set as 90 degrees, and this is abbreviated as 0/90);
the characteristics of B: two or more carbon nanotube assemblies are stacked (as the orientations of the basic units of every two carbon nanotube assemblies are perpendicular, if the orientation of the basic units of one carbon nanotube assembly B₀ is set as 0 degree, the orientation of the basic units of the other carbon nanotube assembly B₉₀ is set as 90 degrees);
wherein, more than one layer of B is inserted into A in the mode that the orientation of A is the same as that of B (the orientation of any layer of non-woven fabric in A is the same as that of the basic units in any carbon nanotube assembly in B);
or, at least one layer of B is compounded on the surface of one side of A₀ and A₉₀, or the surfaces of both sides of A₀ and A₉₀, or the surface(s) of one side or both sides of A.

The high-performance fiber fabric is interwoven fabric

More than one layer of B (defined as mentioned above) is inserted into A (which can be formed by two stacked layers of interwoven fabric), or A (one layer of interwoven fabric) is inserted into B.

Wherein, Bs located on the upper surface and the lower surface of A need to be structurally symmetrical. For example, a B₀AB₉₀B₉₀AB₀ (sequentially stacked) unit structure or a B₀B₉₀AB₉₀B₀ unit structure can be formed.

In certain embodiments, the carbon nanotube assemblies and the fabric are tightly attached through vacuum treatment, cold-pressing treatment or hot-pressing treatment.

In certain embodiments, the carbon nanotube assemblies and the fabric are bonded through binding agents.

In certain embodiments, first binding agent molecules are distributed on the surface of the carbon nanotube assembly, and/or second binding agent molecules are distributed on the surface, matched with the carbon nanotube assembly, of the fabric; and the first binding agent molecules are identical with or different from the second binding agent molecules.

Another embodiment of the application provides a preparation method of the bullet-proof composite material. The preparation method of the bullet-proof composite material comprises the steps:
continuously gathering a plurality of carbon nanotube continuums on one continuous surface and compacting the carbon nanotube continuums to form a plurality of oriented basic units, and densely arranging the multiple basic units to form the carbon nanotube assembly provided with a two-dimensional surface macrostructure, wherein each carbon nanotube continuum is formed by a plurality of disorderly-interwoven carbon nanotubes and is of a closed, semi-closed or open two-dimensional or three-dimensional spatial structure before being compacted;
fixedly attaching the carbon nanotube assembly to the surface of the fabric, so that the bullet-proof composite material is formed.

Preferably, as mentioned above, the carbon nanotube continuums are prepared through the floating catalytic cracking method.

Furthermore, the continuous surface is a plane or a curved surface.

Furthermore, the preparation method can further comprise the step: completing compaction with or without binding agents and/or solvents. Wherein, the binding agents can be, but not limited to, the substances mentioned above. The solvents can be water, organic solvents (such as ethyl alcohol), or certain solutions containing inorganic matter or organic matter.

In certain embodiments, the preparation method can further comprise the step: hot-pressing the carbon nanotube assembly to further improve the distribution compactness of the carbon nanotubes.

Furthermore, the carbon nanotube assemblies can be hot-pressed at least through rollers or a plane press or through the rollers as well as the plane press.

Wherein, the hot-pressing temperature can preferably range from the indoor temperature to 300°C, and the hot-pressing pressure can be preferably 2-50Mpa.

In certain preferred embodiments, the preparation method can further comprise the step: covering at least one carbon nanotube in at least one carbon nanotube assembly with graphene.

Furthermore, the preparation method can further comprise the step: bonding graphene with the multiple carbon nanotubes forming the carbon nanotube assemblies through at least one of clading, infiltrating, soaking and spraying in the forming process of the carbon nanotube assemblies or after the carbon nanotube assemblies are formed.

In certain embodiments, the preparation method comprises the steps:
arranging at least two layers of fabric in a stacked mode to form a basic structural unit;
and covering the surface of at least one side of the basic structural unit with at least one carbon nanotube assembly, and/or inlaying at least one carbon nanotube assembly into the basic structural unit.

In certain embodiments, the fabric is non-woven fabric, and the orientation of the basic units in at least one carbon nanotube assembly is the same as the warp orientation of at least one layer of fabric.

In certain embodiments, the fabric is interwoven fabric, and the two carbon nanotube assemblies arranged the surfaces of the two sides of the basic structural unit in the covering mode are structurally symmetrical.

In certain embodiments, the preparation method comprises the step: injecting binding agents between the carbon nanotube assemblies and the surface of the fabric, so that the carbon nanotube assemblies and the fabric are bonded.

Wherein, the surface of the high-performance fiber fabric can be provided with certain binding agent molecules C.

Wherein, the surfaces of the carbon nanotube assemblies can be provided with or not provided with binding agent molecules D.

Wherein, the binding agent molecules C and the binding agent molecules D can be of the same type or different types, and the usability of any type of binding agent molecules should not be reduced after the binding agent molecules C and the binding agent molecules D are bonded.

In certain embodiments, the preparation method comprises the step: removing air between the fabric and the carbon nanotube assemblies through any method of vacuum treatment, hot pressing or cold pressing, so that the carbon nanotube assemblies are tightly attached to the fabric.

The bullet-proof composite material in the embodiment mentioned above has the characteristics of being low in density, light, thin, good in softness and environmental weatherability, excellent in bullet-proof performance, suitable for batch preparation and the like.

For a further understanding of the application, a detailed description of the application is given with several embodiments and accompanying drawings as follows. However, it should be understood that those skilled in the field can also achieve the application by properly improving the technological parameters according to the content of the description. What particularly needs to be pointed out is that all similar substitutes and modifications which can be easily obtained by those skilled in the field are within the scope of the application. The application has been described through the preferred embodiments, and relevant personnel can easily achieve and apply the application technique through modifications or proper changes and combinations of the application without deviating from the content, spirit and scope of the application.

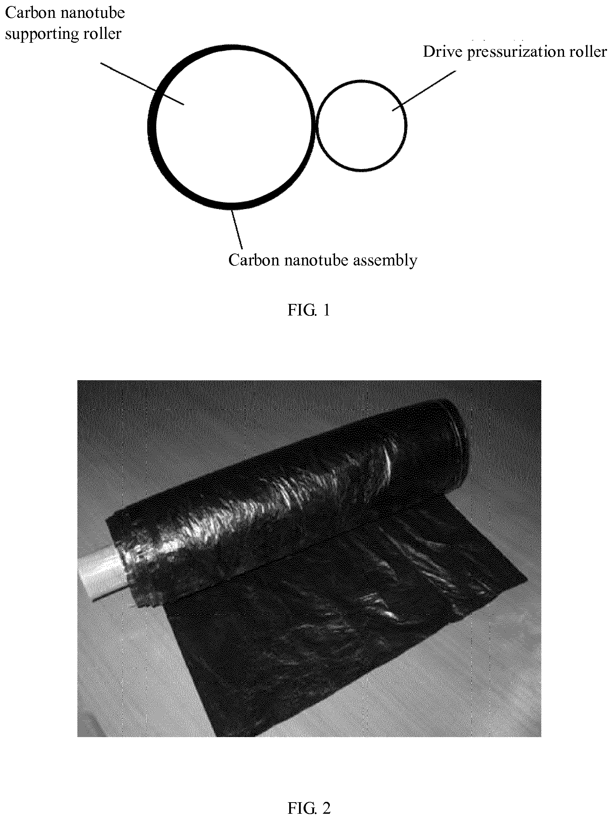

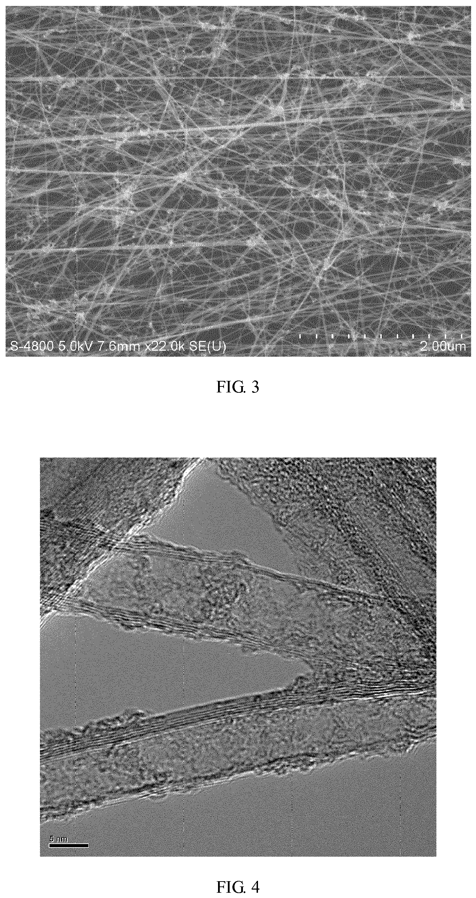

First Embodiment: the preparation technique of the nanocarbon impact-resistant material in the first embodiment comprises the following steps:
1) a cylindrical hollow carbon nanotube continuum grown in a high-temperature furnace (please refer to P276, Issue 304, 2004, Science) is continuously wound on a cylindrical horizontal roller under the effect of air buoyancy by means of the Vander Wale force between carbon nanotubes, the roller can reciprocate in the axial direction by the distance equal to the length of the roller while rotating, ethyl alcohol is sprayed onto the surface of a continuous carbon nanotube assembly obtained after the carbon nanotube continuum is continuously collected for a certain period of time, and meanwhile, a cylindrical steel roller is used for pressurization at the pressure about 4MPa (as is shown in FIG. 1). After the solvent is volatilized at the indoor temperature, the continuous carbon nanotube assembly is taken down from the supporting roller, and thus a self-support nanocarbon film (please see FIGs. 2-4 for the morphology of the self-support nanocarbon film) is formed, wherein the thickness of the self-support nanocarbon film is about 7µm, and the surface density of the self-support nanocarbon film is about 3g/m².
2) Afterwards, as is shown in FIG. 1, the self-support nanocarbon film obtained in step (1) is pressed through a press to further improve the density of the film, wherein the pressing pressure is 15MPa, the pressing temperature is about 90°C, and the pressing time is about 2h. As for the finally obtained nanocarbon impact-resistant material, the average thickness is about 5um, the average surface density is about 3g/m², the average tensile strength is about 800MPa, the average modulus is about 120GPa, and the average breaking elongation is about 9%.

Second Embodiment: the preparation technique of the nanocarbon impact-resistant material in the second embodiment comprises the following steps:
1) the preparation technique of carbon nanotubes in the first embodiment is taken as the reference, a cylindrical hollow carbon nanotube continuum grown in a high-temperature furnace (please refer to the typical case mentioned above for the preparation technique of the carbon nanotube continuum) is continuously wound on a cylindrical horizontal roller under the effect of air buoyancy by means of the Vander Wale force between the carbon nanotubes, the roller can reciprocate in the axial direction by the distance equal to the length of the roller while rotating, a graphene alcohol solution (the concentration is about 0.1wt%-5wt%, and the alcohol solvent in the graphene alcohol solution can be propyl alcohol, ethyl alcohol, ethanediol and the like can also be the mixed solvent of alcohol and water) is sprayed onto the surface of a continuous carbon nanotube assembly obtained after the carbon nanotube continuum is continuously collected for a certain period of time, and meanwhile, a cylindrical steel roller is used for pressurization at the pressure 4MPa (as is shown in FIG. 1). After the solvent is volatilized at the indoor temperature, the continuous carbon nanotube assembly is taken down from the supporting roller, and thus a self-support nanocarbon film is formed, wherein the thickness of the self-support nanocarbon film is about 12µm, and the surface density of the self-support nanocarbon film is about 6.5g/m².
2) The nanocarbon film obtained in step (1) is pressed through a press to further improve the density of the film, wherein the pressing pressure is about 2MPa, the pressing temperature is about 90°C, and the pressing time is about 4h. As for the finally obtained nanocarbon impact-resistant material, the average thickness is about 10µm, the average surface density is about 6.5g/m², the average tensile strength is about 1200MPa, the average modulus is about 140GPa, and the average breaking elongation is about 7%.

Third Embodiment: the preparation technique of the nanocarbon impact-resistant material in the third embodiment comprises the following steps:
1) the preparation technique of carbon nanotubes in the first embodiment is taken as the reference, a cylindrical hollow carbon nanotube continuum grown in a high-temperature furnace (please refer to the first embodiment and the second embodiment) is continuously wound on a cylindrical horizontal roller under the effect of air buoyancy by means of the Vander Wale force between the carbon nanotubes, the roller can reciprocate in the axial direction by the distance equal to the length of the roller while rotating, a graphene polyurethane solution (the concentration is about 0.1wt%-5wt%) is sprayed onto the surface of a continuous carbon nanotube assembly obtained after the carbon nanotube continuum is continuously collected for a certain period of time, and meanwhile, a cylindrical steel roller is used for pressurization at the pressure about 4MPa. After the solvent is volatilized at the indoor temperature, the continuous carbon nanotube assembly is taken down from the supporting roller, and thus a self-support nanocarbon film is formed, wherein the thickness of the self-support nanocarbon film is about 17µm, and the surface density of the self-support nanocarbon film is about 8g/m².
2) The nanocarbon film obtained in step (1) is pressed through a press to further improve the density of the film, wherein the pressing pressure is about 90MPa, the pressing temperature is about 110°C, and the pressing time is about 2h. As for the finally obtained nanocarbon impact-resistant material, the average thickness is about 13µm, the average surface density is about 8g/m², the average tensile strength is about 600MPa, the average modulus is about 80GPa, and the average breaking elongation is about 12%.

Fourth Embodiment: the preparation technique of the nanocarbon impact-resistant material in the fourth embodiment comprises the following steps:
1) continuous carbon nanotube continuums are grown under a high-temperature condition through carbon source gas under the effect of metal catalysts (please refer to the second embodiment), and the obtained carbon nanotube continuums are continuously gathered on a two-dimensional plane and arranged in parallel to form a carbon nanotube film, wherein the carbon nanotubes can be any type or the combinations of more than two types of single-wall carbon nanotubes, double-wall carbon nanotubes and multi-wall carbon nanotubes, the tube diameter of the carbon nanotubes is 2-1 00nm, and as for the carbon nanotube film formed by the carbon nanotubes bonded together by means of the Vander Wale force, the thickness is about 5-15um, and the surface density is about 3-7g/m².
2) The nanocarbon film obtained in step (1) is pressed through a press to further improve the density of the film, wherein the pressing temperature is the indoor temperature, the pressing pressure is about 120MPa, and the pressing time about 1h. As for the finally obtained nanocarbon impact-resistant material, the average tensile strength is about 300MPa, the average modulus is about 130GPa, and the average breaking elongation is about 12%.

Fifth Embodiment: the preparation technique of the nanocarbon impact-resistant material in the fifth embodiment comprises the following steps:
continuous carbon nanotube continuums are formed through pyrolysis of carbon source gas (please refer to the second embodiment), and a film material is formed through planar winding of a carbon nanotube assembly, wherein as for the film material, the average thickness is about 22µm, the average surface density is about 6.5g/m², the average tensile strength is about 3-50MPa, the average modulus is about 15GPa, and the average breaking elongation is about 25%.

### Sixth Embodiment:

One nanocarbon impact-resistant material obtained in the first embodiment is regarded as a basic unit, and four basic units are stacked in the mode that the orientation angle of the carbon nanotube assembly on the top layer is 0 degree, the orientation angle of the carbon nanotube assembly on the second layer is 90 degrees (namely the orientation angle of the carbon nanotube assembly on the second layer is perpendicular to that of the carbon nanotube assembly on the top layer), the orientation angle of the carbon nanotube assembly on the third layer is 0 degree (namely the orientation angle of the carbon nanotube assembly on the third layer is the same as that of the carbon nanotube assembly on the top layer) and the orientation angle of the carbon nanotube assembly on the bottom layer is 90 degrees (namely the orientation angle of the carbon nanotube assembly on the bottom layer is perpendicular to that of the carbon nanotube assembly on the top layer); and the four basic units are then pressed to form a structure defined as A[0/90/0/90], and the other four basic units are stacked in the similar mode to form a structure defined as B [0/45/90/135] .

Over 400 layers of nanocarbon films are stacked in the A/B/A/B mode and then pressed, and thus the nanocarbon impact-resistant material with the composite structure is formed.

Adjacent basic units in the structural layers A and the structural layers B are bonded together with polyurethane binding agents, and each structural layer A and the adjacent structural layer B are also bonded together with polyurethane binding agents.

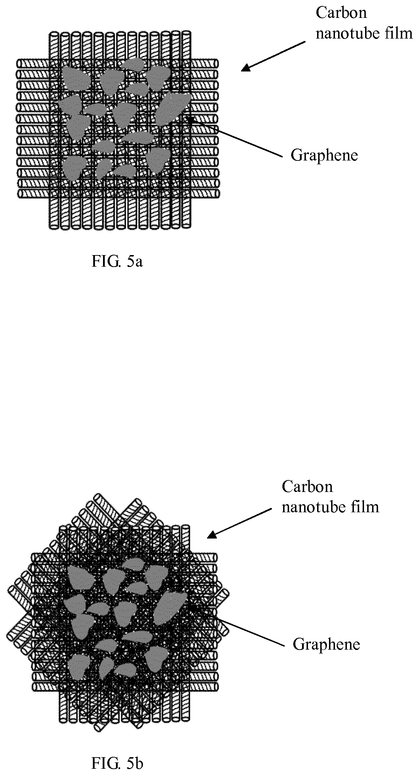

Seventh Embodiment: according to the scheme in the sixth embodiment, a structural layer A[0/90/0/90] and a structural layer B[0/45/90/135] are prepared with one nanocarbon impact-resistant material obtained in the second embodiment as a basic unit (as is shown in FIG. 5a and FIG. 5b), and then the nanocarbon impact-resistant material with the composite structure is prepared.

Eighth Embodiment: according to the scheme in the sixth embodiment, the nanocarbon impact-resistant material with the composite structure is prepared with one nanocarbon impact-resistant material obtained in the third embodiment as a basic unit.

Table 1 shows the performance testing results of the nanocarbon impact-resistant material with the composite structure obtained in the embodiments 6-8.

Ninth Embodiment: a buckypaper-shaped carbon nanotube film is prepared from carbon nanotube powder sold on the market through a filtration method, wherein as for the buckypaper-shaped carbon nanotube film, the thickness is about 40µm, the surface density is about 12g/m², the tensile strength is about 10MPa, the modulus is about 2GPa, and the breaking elongation is about 3%.

Tenth Embodiment: a spun carbon nanotube array is drawn to form a super-aligned carbon nanotube film, wherein as for the super-aligned carbon nanotube film, the thickness is about 7µm, the surface density is about 6g/m², the tensile strength is about 400MPa, the modulus is about 45GPa, and the breaking elongation is about 3%.

### Eleventh Embodiment:

1) a carbon nanotube film is prepared, specifically, continuous carbon nanotube continuums are grown under a high-temperature condition through carbon source gas under the effect of metal catalysts (please refer to P276, Issue304, 2004, science), and the continuous carbon nanotube continuums are continuously gathered on a two-dimensional plane in parallel to form the carbon nanotube film, wherein the carbon nanotubes can be any type or the combinations of more than two types of single-wall carbon nanotubes, double-wall carbon nanotubes and multi-wall carbon nanotubes, and the tube diameter of the carbon nanotubes is 2-100nm; the carbon nanotubes are bonded together by means of the Vander Wale force, then the carbon nanotube film is pressed through a press (please see FIG. 1 for the pressing process) to further improve the density of the film, wherein the pressing pressure is 15MPa, the pressing temperature is 90°C, and the pressing time is 2h; and as for the finally obtained carbon nanotube film (with the morphology as is shown in FIGs. 2-4), the average surface density is about 5g/m², the average tensile strength is about 300MPa, the average modulus is about 60GPa, and the average breaking elongation is about 10%.
2) UHMWPE unidirectional cloth is prepared, specifically, UHMWPE fibers with the surfaces dipped with glue (with the tensile strength about 22CN/dtex) are arranged in the plane in parallel to form the unidirectional cloth, and the surface density of the unidirectional cloth is about 40g/m².
3) The carbon nanotube film obtained in step (1) and one layer of UHMWPE unidirectional cloth are compounded through hot pressing to form a subunit, and the method for hot pressing comprises:
   the first stage for which the temperature is 110 °C, the pressure is 2MPa and the time is 10min;
   the second stage for which the temperature is 130 °C, the pressure is 25MPa and the time is 10min, and then natural cooling is conducted;
4) Four subunits obtained in step (3) are stacked in the 0/90/45/-45 mode (the warp orientation of the unidirectional cloth in the first subunit is set as 0 degree, the warp orientation of the unidirectional cloth in the second subunit is set as 90 degrees, the warp orientation of the unidirectional cloth in the third subunit is set as 45 degrees, the warp orientation of the unidirectional cloth in the fourth subunit is set as -45 degrees, and this is abbreviated as 0/90/45/-45) to form a structural layer.
5) Thirty structural layers are stacked to form a stab-proof structure, and then a dynamic puncture test is conducted.

### Twelfth Embodiment:

1) a carbon nanotube film is prepared, specifically, continuous carbon nanotube continuums are grown under a high-temperature condition through carbon source gas under the effect of metal catalysts (please refer to the typical embodiment mentioned above), and the continuous carbon nanotube continuums are continuously gathered on a two-dimensional plane in parallel to form a carbon nanotube film, wherein the carbon nanotubes can be any type or the combinations of more than two types of single-wall carbon nanotubes, double-wall carbon nanotubes and multi-wall carbon nanotubes, and the tube diameter of the carbon nanotubes is 2-100nm; the carbon nanotubes are bonded together by means of the Vander Wale force, then the carbon nanotube film is pressed through a press to further improve the density of the film, wherein the pressing pressure is 2MPa, the pressing temperature is 90°C, and the pressing time is about 4h; and as for the finally obtained carbon nanotube film, the average surface density is about 5.5g/m², the average tensile strength is about 200MPa, the average modulus is about 45Gpa, and the average breaking elongation is about 18%.
2) Aramid fiber unidirectional cloth is prepared, specifically, aramid fibers with the surfaces dipped with glue (with the tensile strength about 22CN/dtex) are arranged in the plane in parallel to form the unidirectional cloth, and the surface density of the unidirectional cloth is about 110g/m².
3) The carbon nanotube film obtained in step (1) and the aramid fiber unidirectional cloth are compounded through hot pressing to form a subunit, and the method for hot pressing comprises:
   the first stage for which the temperature is 110 °C, the pressure is 2MPa and the time is 10min;
   the second stage for which the temperature is 130 °C, the pressure is 25MPa and the time is 10min, and then natural cooling is conducted.
4) Four subunits obtained in step (3) are stacked in a 0/90/45/-45 mode (the warp orientation of the unidirectional cloth in the first subunit is set as 0 degree, the warp orientation of the unidirectional cloth in the second subunit is set as 90 degrees, the warp orientation of the unidirectional cloth in the third subunit is set as 45 degrees, the warp orientation of the unidirectional cloth in the fourth subunit is set as -45 degrees, and this is abbreviated as 0/90/45/-45) to form a structural layer;
5) Thirty structural layers are stacked to form a stab-proof structure, and then a dynamic puncture test is conducted.

### Thirteenth Embodiment:

1) a carbon nanotube film is prepared, specifically, continuous carbon nanotube continuums are grown under a high-temperature condition through carbon source gas under the effect of metal catalysts (please refer to the twelfth embodiment), and the carbon nanotube continuums are continuously gathered on a two-dimensional plane in parallel to form a carbon nanotube film, wherein the carbon nanotubes can be any type or the combinations of more than two types of single-wall carbon nanotubes, double-wall carbon nanotubes and multi-wall carbon nanotubes, and the tube diameter of the carbon nanotubes is 2-100nm; the carbon nanotubes are bonded together by means of the Vander Wale force, then the carbon nanotube film is pressed through a press to further improve the density of the film, wherein the pressing temperature is the indoor temperature, the pressing pressure is 120MPa, and the pressing time is about 1h; and as for the finally obtained carbon nanotube film, the average surface density is about 5g/m², the average tensile strength is about 200MPa, the average modulus is about 45Gpa, and the average breaking elongation is about 18%.
2) UHMWPE unidirectional cloth is prepared, specifically, UHMWPE fibers with the surfaces dipped with glue are arranged on the plane in parallel to form the unidirectional cloth, and the surface density of the unidirectional cloth is about 40g/m².
3) The carbon nanotube film obtained in step (1) and one layer of UHMWPE unidirectional cloth are compounded through hot pressing to form a subunit, and the method for hot pressing comprises:
   the first stage for which the temperature is 110 °C, the pressure is 2MPa and the time is 10min;
   the second stage for which the temperature is 130 °C, the pressure is 25MPa and the time is 1 min, and then natural cooling is conducted.
4) Four subunits obtained in step (3) are stacked in the 0/45/90/-45 mode to form a structural layer;
5) Ten structural layers are stacked to form a stab-proof structure, and then a dynamic puncture test is conducted.

First Contrast Embodiment: ten UHMWPE units obtained in the eleventh embodiment are stacked for a dynamic test.

Second Contrast Embodiment: eight aramid fiber units obtained in the twelfth embodiment are stacked for a dynamic test.

Fourteenth Embodiment: a buckypaper-shaped carbon nanotube film is prepared from carbon nanotube powder sold on the market through a filtration method, wherein as for the buckypaper-shaped carbon nanotube film, the thickness is about 40um, the surface density is about 12g/m², the tensile strength is about 10MPa, the modulus is about 2GPa, and the breaking elongation is about 3%. Afterwards, the carbon nanotube film in the eleventh embodiment is replaced with the buckypaper-shaped carbon nanotube film, and according to the scheme in the eleventh embodiment, the buckypaper-shaped carbon nanotube film and the UHMWPE unidirectional cloth are bonded to form the stab-proof composite material. As for the stab-proof composite material, the average surface density is about 170g/m², and the maximum puncture depth is 50cm.

Fifteenth Embodiment: a spun carbon nanotube array is drawn to form a super-aligned carbon nanotube film, wherein as for the super-aligned carbon nanotube film, the thickness is about 7µm, the surface density is about 6g/m², the tensile strength is about 400MPa, the modulus is about 45GPa, and the breaking elongation is about 3%. Afterwards, the carbon nanotube film in the twelfth embodiment is replaced with the super-aligned carbon nanotube film, and according to the scheme in the twelfth embodiment, the super-aligned carbon nanotube film and the aramid fiber unidirectional cloth are bonded to form the stab-proof composite material. As for the stab-proof composite material, the average surface density is about 115g/m², and the maximum puncture depth is about 18cm, and the maximum load is about 850N.

### Sixteenth Embodiment:

1) a cylindrical hollow carbon nanotube continuum grown in a high-temperature furnace (please refer to P276, Issue 304, 2004, Science) is continuously wound on a cylindrical horizontal roller under the effect of air buoyancy by means of the Vander Wale force between carbon nanotubes, the roller can reciprocate in the axial direction by the distance equal to the length of the roller while rotating, ethyl alcohol is sprayed onto the surface of a continuous carbon nanotube assembly obtained after the carbon nanotube continuum is continuously collected for a certain period of time, and meanwhile, a cylindrical steel roller is used for pressurization at the pressure about 4MPa (please see FIG. 1 for the process). After the solvent is volatilized at the indoor temperature, the continuous carbon nanotube assembly is taken down from the supporting roller, and thus a self-support nanocarbon film. Afterwards, the self-support nanocarbon film is pressed through a press to further improve the density of the film, wherein the pressing pressure is about 15MPa, the pressing temperature is about 90 °C, and the pressing time is about 2h. As for the finally obtained carbon nanotube film (with the morphology as is shown in FIGs. 2-4), the average surface density is about 5.5g/m², the average tensile strength is about 300MPa, the average modulus is about 60Gpa, and the average breaking elongation is about 10%, and the carbon nanotube film is marked as M.
2) UHMWPE non-woven cloth is prepared, specifically, each layer of UHMWPE non-woven cloth is formed by four pieces of unidirectional cloth stacked in the 0/90/0/90 mode (defined as mentioned above), the surface density of the UHMWPE non-woven cloth is 120g/m², and the UHMWPE non-woven cloth is marked as P.
3) The structure is designed, specifically, the upper side and the lower side are each provided with a structure formed by twelve stacked P, and a structure formed by sixty stacked M is located in the middle, and the whole structure is marked as 12P/60M/12P.
4) Cold pressing is conducted, specifically, cold pressing is conducted at the pressure of 8MPa for 30min, so that the bullet-proof composite material is obtained, and Table 3 shows the performance testing data of the bullet-proof composite material.

### Seventeenth Embodiment:

1) The preparation in the sixteenth embodiment is taken as the reference, a cylindrical hollow carbon nanotube continuum grown in a high-temperature furnace (please refer to the typical case mentioned above for the preparation technique of the carbon nanotube continuum) is continuously wound on a cylindrical horizontal roller under the effect of air buoyancy by means of the Vander Wale force between the carbon nanotubes, the roller can reciprocate in the axial direction by the distance equal to the length of the roller while rotating, a graphene alcohol solution (the concentration is about 0.1wt%-5wt%, and the alcohol solvent in the graphene alcohol solution can be propyl alcohol, ethyl alcohol, ethanediol and the like can also be the mixed solvent of alcohol and water) is sprayed onto the surface of a continuous carbon nanotube assembly obtained after the carbon nanotube continuum is continuously collected for a certain period of time, and meanwhile, a cylindrical steel roller is used for pressurization at the pressure about 4MPa (as is shown in FIG. 1). After the solvent is volatilized at the indoor temperature, the continuous carbon nanotube assembly is taken down from the supporting roller, and thus a self-support nanocarbon film is obtained formed; the nanocarbon tube film is then pressed through a press to further improve the density of the film, wherein the pressing pressure is about 2MPa, the pressing temperature is about 90°C, and the pressing time is about 4h. As for the finally obtained carbon nanotube film, the average surface density is about 5.5g/m², the average tensile strength is about 450MPa, the average modulus is about 90GPa, the average breaking elongation is about 7%, and the nanocarbon tube film is marked as M.
2) UHMWPE non-woven cloth is prepared, specifically, each layer of non-woven cloth is formed by four pieces of unidirectional cloth which are stacked in the 0/90/0/90 mode (defined as mentioned above), the surface density of the UHMWPE non-woven cloth is about120g/m², and the UHMWPE non-woven cloth is marked as P.
3) The structure is designed, specifically, the upper side is provided with a structure formed by seven stacked P, the lower side is provided with a structure formed by seventeen stacked P, a structure formed by sixty stacked M is located in the middle, and the whole structure is marked as 7P/60M/17P.
4) Cold pressing is conducted, specifically, cold pressing is conducted at the pressure of 8MPa for 30min, so that the bullet-proof composite material is obtained, and Table 3 shows the performance testing data of the bullet-proof composite material.

### Eighteenth Embodiment:

1) Continuous carbon nanotube continuums are grown under a high-temperature condition through carbon source gas under the effect of metal catalysts (please refer to the seventeenth embodiment), and the obtained carbon nanotube continuums are continuously gathered on a two-dimensional plane and arranged in parallel to form a carbon nanotube film, wherein the carbon nanotubes can be any type or the combinations of more than two types of single-wall carbon nanotubes, double-wall carbon nanotubes and multi-wall carbon nanotubes, and the tube diameter of the carbon nanotubes is 2-100nm. The carbon nanotubes are bonded by means of the Vander Wale force and wound on a plane to form a carbon nanotube film, and the carbon nanotube film is then pressed through a press to further improve the density of the film, wherein the pressing temperature is the indoor temperature, the pressing pressure is about 10MPa, and the pressing time is about 1h. As for the finally obtained film, the average surface density is about 5.5g/m², the average tensile strength is about 200MPa, the average modulus is about 45GPa, the average breaking elongation is about 18%, and the film is marked as M.
2) UHMWPE non-woven cloth is prepared, specifically, each layer of UHMWPE non-woven cloth is formed by four pieces of unidirectional cloth stacked in the 0/90/0/90 mode. The surface density of the UHMWPE non-woven cloth is 120 g/m², and the UHMWPE non-woven cloth is marked as P.
3) The structure is designed, specifically, the upper side is provided with a structure formed by seventeen stacked P, the lower side is provided with a structure formed by seven stacked P, a structure formed by sixty stacked M is located in the middle, and the whole structure is marked as 17P/60M/7P.
4) Cold pressing is conducted, specifically, cold pressing is conducted at the pressure of 8MPa for 30min, so that the bullet-proof composite material is obtained, and Table 3 shows the performance testing data of the bullet-proof composite material.

### Nineteenth Embodiment:

1) Continuums are formed by carbon nanotubes through pyrolysis of carbon source gas, and a film material is formed through planar winding of the assembly. The surface density of the film material is 5.5g/m², the tensile strength of the film material is 200MPa, the modulus of the film material is 45GPa, the breaking elongation of the film material is 18%, and the film material is marked as F.
2) UHMWPE non-woven cloth is prepared, specifically, each layer of UHMWPE non-woven cloth is formed by four pieces of unidirectional cloth stacked in the 0/90/0/90 mode. The surface density of the UHMWPE non-woven cloth is 120g/m², and the UHMWPE non-woven cloth is marked as P.
3) The structure is designed, specifically, one P and two M are stacked to form a structural unit, and twenty-four structural units are stacked to form a composite structure marked as [1 P/2M]24.
4) Cold pressing is conducted, specifically, cold pressing is conducted at the pressure of 8MPa for 30min, so that the bullet-proof composite material is obtained, and Table 3 shows the performance testing data of the bullet-proof composite material.

Third Contrast Embodiment: UHMWPE non-woven cloth is prepared, specifically, each layer of UHMWPE non-woven cloth is formed by four pieces of unidirectional cloth stacked in the 0/90/0/90 mode. The surface density of the UHMWPE non-woven cloth is 120g/m², and the UHMWPE non-woven cloth is marked as P. Twenty-four P are stacked to form the bullet-proof composite material, and Table 3 shows the performance testing data of the formed bullet-proof composite material.

Twentieth Embodiment: a buckypaper-shaped carbon nanotube film is prepared from carbon nanotube powder sold on the market through a filtration method, wherein as for the buckypaper-shaped carbon nanotube film, the thickness is about 40um, the surface density is about 12g/m², the tensile strength is about 10MPa, the modulus is about 2GPa, and the breaking elongation is about 3%. According to the scheme in the sixteenth embodiment, the buckypaper-shaped carbon nanotube film and the UHMWPE non-woven cloth are bonded to form the bullet-proof composite material. As for the formed bullet-proof composite material, the average surface density is about 125g/m², the number of penetration layers is about 9, the V50 value is about 510m/s, and the concave depth is about 22mm.

Twenty-first Embodiment: a spun carbon nanotube array is drawn to form a super-aligned carbon nanotube film, wherein as for the super-aligned carbon nanotube film, the thickness is about 7µm, the surface density is about 6g/m², the tensile strength is about 400MPa, the modulus is about 45GPa, and the breaking elongation is about 3%. According to the scheme of the seventeenth embodiment, the super-aligned carbon nanotube film and the UHMWPE non-woven cloth are bonded to form the bullet-proof composite material. As for the formed bullet-proof composite material, the average surface density is about 126g/m², the number of penetration layers is about 10, the V50 value is about 520m/s, and the concave depth is about 1mm.

**Table 1**

| serial number | V50( m/s) | thickness (mm) | penetration depth (mm) |
|---|---|---|---|
| sixth embodiment | 420 | 6 | 11 |
| seventh embodiment | 515 | 8 | 6 |
| eighth embodiment | 540 | 8 | 0 |

Note: the bullet-proof standard: the bullet-proof test standard for police GA141-2010. The stab-proof: GA-2008.

**Table 2**

| | eleventh embodiment | twelfth embodiment | thirteenth embodiment | first contrast embodiment | second contrast embodiment |
|---|---|---|---|---|---|
| fiber type | UHMWPE | aramid fiber | UHMWPE | UHMWPE | aramid fiber |
| surface density of film g/m² | 5 | 5 | 5 | -- | -- |
| surface density of composite material g/m² | 6 | 6 | 6 | 6 | 6 |
| stacking angle | 0/90/45/-45 | 0/90/45/-45 | 0/45/90/-45 | 0/90/45/-45 | 0/90/45/-45 |
| maximum penetration depth (cm) | 12 | 13 | 9 | 43 | 50 |
| maximum load (N) | 935 | 900 | 961 | 604 | 581 |

**Table 3: test result comparison for the embodiments 1-4 and the product in the first contrast embodiment**

| | sixteenth embodiment | seventeenth embodiment | eighteenth embodiment | nineteenth embodiment | third contrast embodiment |
|---|---|---|---|---|---|
| surface density g/m² | 3.2 | 3.2 | 3.2 | 3.2 | 3 |
| number of penetration layers | 9 | 7 | 7 | 8 | / |
| V50 value m/s | 533 | 541 | 517 | 533 | 460 |
| concave depth mm | 19 | 19 | 22 | 21 | 20 |

What needs to be pointed out is that the drawings of the application are in an extremely simplified form and an inaccurate proportion and are only used for assisting in conveniently and clearly describing the embodiments of the application. Furthermore, the terms such as 'comprise', 'include' or other variants all indicate non-exclusive inclusion, so that processes, methods, articles or devices including a series of elements not only include the mentioned elements, but also include other elements which are not clearly listed or include inherent elements of the processes, the methods, the articles or the devices.

It should be understood that the above embodiments are only preferred embodiments of the application and are not used for limiting the application. For those skilled in the field, various modifications and changes of the application can be obtained.

## Claims

1. An application of carbon nanotube assemblies to the preparation of a nanocarbon impact-resistant material, **characterized in that** the carbon nanotube assembly is a macrostructure provided with at least one continuous surface, a plurality of carbon nanotubes are densely distributed in the continuous surface, at least partial segments of at least part of the multiple carbon nanotubes continuously extent in the continuous surface, the carbon nanotube assembly comprises a plurality of basic units which are distributed in an oriented mode, and each basic unit comprises a two-dimensional surface structure which is formed by a plurality of interwoven carbon nanotubes, the multiple basic units are densely distributed in at least one continuous surface in parallel, thus the carbon nanotube assembly is in a macro-ordered form, and the multiple carbon nanotubes in each basic unit are interwoven disorderly, thus the carbon nanotube assembly is in a micro-disordered form.

2. The application according to Claim 1, **characterized in that** the nanocarbon impact-resistant material is a bullet-proof composite material, and the bullet-proof composite material comprises:
at least one carbon nanotube assembly; and fabric, wherein the surface of at least one side of the fabric is covered with at least one carbon nanotube assembly.

3. The application according to Claim 1, **characterized in that** the nanocarbon impact-resistant material is a stab-proof composite material, and the stab-proof composite material comprises:
at least one carbon nanotube assembly, wherein the carbon nanotube assembly comprises a carbon nanotube film formed by a plurality of closely-gathered carbon nanotubes; and
soft base cloth, wherein the surface of at least one side of the soft base cloth is covered with at least one carbon nanotube film.

4. The application according to Claim 1, **characterized in that** each of at least two carbon nanotube assemblies arranged in a stacked mode are of a two-dimensional surface macrostructure, and at least one carbon nanotube assembly comprises a plurality of basic units which are distributed in an oriented mode in the first direction, the other carbon nanotube assembly comprises a plurality of basic units which are distributed in an oriented mode in the second direction, and the included angle between the first direction and the second direction is 0-180 degrees and preferably is 45-135 degrees.

5. The application according to Claim 1, **characterized in that** multiple carbon nanotube continuums are continuously deposited on at least one continuous surface and then compacted, so that the multiple basic units are formed, each carbon nanotube continuum is formed by a plurality of interwoven carbon nanotubes and is of a closed, semi-closed or open two-dimensional or three-dimensional spatial structure before being compacted, and the carbon nanotube continuums are prepared through the floating catalytic cracking method.

6. The application according to Claim 1, **characterized in that** the longitudinal peripheries of every two adjacent basic units can be spaced from each other, or be next to each other or overlap with each other.

7. The application according to Claim 1, **characterized in that** every two adjacent carbon nanotube assemblies are directly bonded together; or a binding material layer is further arranged between every two adjacent carbon nanotube assemblies, or shear thickening fluid is injected between every two adjacent carbon nanotube assemblies.

8. The application according to Claim 1, **characterized in that** the nanocarbon impact-resistant material further comprises the assembly of a plurality of graphene sheets, and at least one carbon nanotube assembly and at least one assembly of multiple graphene sheets are of a two-dimensional surface macrostructure and are arranged in a stacked mode.

9. The application according to Claim 1, **characterized in that** the carbon nanotube assembly is provided with a porous structure, the pore diameter of pores of the porous structure is 10nm-200nm, and the porosity of the porous structure is 10%-60%, and/or, the tube diameter of the carbon nanotubes is 2-100nm, and/or, the content of the carbon nanotubes in the carbon nanotube assembly is over 99wt%, and/or, at least one carbon nanotube assembly is a self-support carbon nanotube film.

10. The application according to Claim 1, **characterized in that** the nanocarbon impact-resistant material is of a soft filmy or sheet structure on the whole, and/or, the thickness of the nanocarbon impact-resistant material is 1-100µm and preferably is 5-15µm, and/or, the surface density of the nanocarbon impact-resistant material is 2-20g/m² and preferably is 5-10g/m², and/or, the tensile strength of the nanocarbon impact-resistant material is over 10MPa, preferably is over 90Mpa and particularly is over 200MPa, and the modulus of the nanocarbon impact-resistant material is over 10GPa, preferably is over 30Gpa and particularly is over 60GPa, and/or, the tolerable temperature the nanocarbon impact-resistant material ranges from the liquid nitrogen temperature to 500°C.

11. The application according to Claim 3, **characterized in that** the stress of the carbon nanotube film is equal to or higher than 10MPa, the elongation of the carbon nanotube film is equal to or higher than 2%, the absolute value of the difference between the tensile stress in the length direction and the tensile stress in the width direction is smaller than or equal to 20% of the tensile stress in the length direction or in the width direction, and the absolute value of the difference between the breaking elongation in the length direction and the breaking elongation in the width direction is smaller than or equal to 10% of the breaking elongation in the length direction or in the width direction ,and/or, the thickness of the carbon nanotube film is smaller than or equal to that of the soft base cloth, and/or, the soft base cloth is formed by high-performance fibers wherein the strength of the high-performance fibers is equal to or higher than 2.0GPa, the modulus of the high-performance fibers is equal to or higher than 80GPa, and the elongation of the high-performance fibers is 3-5%.

12. The application according to Claim 2, **characterized in that** the carbon nanotube assembly is a carbon nanotube film, the strength of the carbon nanotube film in the orientation direction of the basic units of the carbon nanotube film is 50MPa-12GPa and preferably is 120MPa-1 GPa, and the strength of the carbon nanotube film in the direction perpendicular to the orientation direction of the basic units is 30MPa-10GPa and preferably is 60MPa-800MPa, and/or the tensile strength of monofilaments of the fabric is over 22CN/dtex and preferably is over 35CN/dtex, and/or wherein the fabric is high-performance fiber fabric, wherein the surface density of the high-performance fiber fabric is 35-220g/m² and preferably is 120-160g/m², and/or, wherein the high-performance fiber fabric is formed by high-performance fibers which can be any type or the combination of more than two types of UHMWPE fibers, aramid fibers and poly-p-phenylene ben-zobisthiazole fibers.

13. The application according to Claim 2, **characterized in that** the nanocarbon impact-resistant material comprises at least two layers of fabric arranged in a stacked mode, wherein at least one carbon nanotube assembly is distributed between every two adjacent layers of fabric,
and/or, at least two carbon nanotube assemblies arranged in a stacked mode, wherein at least one layer of fabric is distributed between every two adjacent carbon nanotube assemblies,
and the carbon nanotube assemblies are filmy.

14. The application according to Claim 13, **characterized in that** every two adjacent layers of fabric are both non-woven fabric, and the included angle between the warp orientation direction of one layer of fabric and the warp orientation direction of the other layer of fabric is 0-180 degrees and preferably is 45-135 degrees, or the orientation direction of the basic units in at least one carbon nanotube assembly distributed between every two adjacent layers of fabric is the same as the warp orientation direction of at least one layer of fabric, and the fabric is non-woven fabric.

15. The application according to Claim 3, **characterized in that** a stab-proof structure is prepared from the stab-proof composite materials and comprises N subunits which are arranged in a stacked mode, wherein each subunit comprises the stab-proof composite material and N is an integral multiple of four, then in every two adjacent subunits, the basic units of the carbon nanotube assemblies in one subunit are arranged in an oriented mode in the first direction, the basic units of the carbon nanotube assemblies in the other subunit are arranged in an oriented mode in the second direction, the included angle between the first direction and the second direction is 0-180 degrees and preferably is 45-135 degrees.

## Patentansprüche

1. Anwendung von Kohlenstoffnanoröhrenanordnungen zur Herstellung eines schlagfesten Nanokohlenstoffmaterials, **dadurch gekennzeichnet, dass** die Kohlenstoffnanoröhrenanordnung eine Makrostruktur ist, die mit mindestens einer kontinuierlichen Oberfläche versehen ist, eine Vielzahl von Kohlenstoffnanoröhren dicht in der kontinuierlichen Oberfläche verteilt sind, zumindest Teilsegmente mindestens eines Teils der Vielzahl von Kohlenstoffnanoröhren sich kontinuierlich in der kontinuierlichen Oberfläche erstrecken, die Kohlenstoffnanoröhrenanordnung eine Vielzahl von Grundeinheiten umfasst, die in einem orientierten Modus verteilt sind, und jede Grundeinheit eine zweidimensionale Oberflächenstruktur aufweist, die durch eine Vielzahl von miteinander verwobenen Kohlenstoff-Nanoröhren gebildet wird, die mehreren Grundeinheiten dicht in mindestens einer kontinuierlichen Oberfläche parallel verteilt sind, so dass die Kohlenstoff-Nanoröhren-Anordnung in einer makro-geordneten Form vorliegt, und die mehreren Kohlenstoff-Nanoröhren in jeder Grundeinheit ungeordnet miteinander verwoben sind, so dass die Kohlenstoff-Nanoröhren-Anordnung in einer mikro-ungeordneten Form vorliegt.

2. Anwendung nach Anspruch 1, **dadurch gekennzeichnet, dass** das stoßfeste Nanokohlenstoffmaterial ein kugelsicheres Verbundmaterial ist, und das kugelsichere Verbundmaterial umfasst mindestens eine Kohlenstoff-Nanoröhren-Anordnung; und Gewebe, wobei die Oberfläche mindestens einer Seite des Gewebes mit mindestens einer Kohlenstoff-Nanoröhren-Anordnung bedeckt ist.

3. Anwendung nach Anspruch 1, **dadurch gekennzeichnet, dass** das schlagzähe Nanokohlenstoffmaterial ein stichfestes Verbundmaterial ist, und das stichfeste Verbundmaterial umfasst:
mindestens eine Kohlenstoff-Nanoröhren-Anordnung, wobei die Kohlenstoff-Nanoröhren-Anordnung einen Kohlenstoff-Nanoröhren-Film umfasst, der durch eine Vielzahl von eng beieinander liegenden Kohlenstoff-Nanoröhren gebildet wird; und
weiches Grundgewebe, wobei die Oberfläche von mindestens einer Seite des weichen Grundgewebes mit mindestens einem Kohlenstoff-Nanoröhrenfilm bedeckt ist.

4. Anwendung nach Anspruch 1, **dadurch gekennzeichnet, dass** jede von mindestens zwei Kohlenstoffnanoröhrenanordnungen, die in einem gestapelten Modus angeordnet sind, eine zweidimensionale Oberflächenmakrostruktur aufweist, und mindestens eine Kohlenstoffnanoröhrenanordnung eine Vielzahl von Grundeinheiten umfasst, die in einem orientierten Modus in der ersten Richtung verteilt sind, die andere Kohlenstoffnanoröhrenanordnung eine Vielzahl von Grundeinheiten umfasst, die in einem orientierten Modus in der zweiten Richtung verteilt sind, und der eingeschlossene Winkel zwischen der ersten Richtung und der zweiten Richtung 0-180 Grad und vorzugsweise 45-135 Grad beträgt.

5. Anwendung nach Anspruch 1, **dadurch gekennzeichnet, dass** mehrere Kohlenstoff-Nanoröhren-Kontinua kontinuierlich auf mindestens einer kontinuierlichen Oberfläche abgeschieden und dann verdichtet werden, so dass die mehreren Grundeinheiten gebildet werden, jedes Kohlenstoff-Nanoröhren- Kontinuum durch eine Vielzahl von miteinander verwobenen Kohlenstoff- Nanoröhren gebildet wird und eine geschlossene, halbgeschlossene oder offene zweidimensionale oder dreidimensionale räumliche Struktur aufweist, bevor es verdichtet wird, und die Kohlenstoff-Nanoröhren-Kontinua durch das Verfahren des schwimmenden katalytischen Crackens hergestellt werden.

6. Anwendung nach Anspruch 1, **dadurch gekennzeichnet, dass** die Längsränder von jeweils zwei benachbarten Grundeinheiten voneinander beabstandet sein können oder nebeneinander liegen oder sich überlappen.

7. Anwendung nach Anspruch 1, **dadurch gekennzeichnet, dass** jeweils zwei benachbarte Kohlenstoff-Nanoröhren-Baugruppen direkt miteinander verbunden sind; oder dass zwischen jeweils zwei benachbarten Kohlenstoff-Nanoröhren-Baugruppen eine Bindemittelschicht angeordnet ist, oder dass zwischen jeweils zwei benachbarten Kohlenstoff-Nanoröhren-Baugruppen eine scherverdickende Flüssigkeit eingespritzt wird.

8. Anwendung nach Anspruch 1, **dadurch gekennzeichnet, dass** das stoßfeste Nanokohlenstoffmaterial ferner die Anordnung einer Vielzahl von Graphenblättern umfasst, und dass mindestens eine Kohlenstoffnanoröhrenanordnung und mindestens eine Anordnung von mehreren Graphenblättern eine zweidimensionale Oberflächenmakrostruktur aufweisen und in einem gestapelten Modus angeordnet sind.

9. Anwendung nach Anspruch 1, **dadurch gekennzeichnet, dass** die Kohlenstoff-Nanoröhren-Anordnung mit einer porösen Struktur versehen ist, der Porendurchmesser der Poren der porösen Struktur 10 nm bis 200 nm beträgt und die Porosität der porösen Struktur 10 % bis 60 % beträgt und/oder der Röhrendurchmesser der Kohlenstoff-Nanoröhren 2 bis 100 nm beträgt und/oder der Gehalt der Kohlenstoff-Nanoröhren in der Kohlenstoff-Nanoröhren-Anordnung über 99 Gew.-% liegt und/oder mindestens eine Kohlenstoff-Nanoröhren-Anordnung ein selbsttragender Kohlenstoff-Nanoröhren-Film ist.

10. Anwendung nach Anspruch 1, **dadurch gekennzeichnet, dass** das schlagzähe Nanokohlenstoffmaterial insgesamt eine weiche Folien- oder Plattenstruktur aufweist, und/oder die Dicke des schlagzähen Nanokohlenstoffmaterials 1-100µm und vorzugsweise 5-15µm beträgt, und/oder die Oberflächendichte des schlagzähen Nanokohlenstoffmaterials 2-20g/m² und vorzugsweise 5-10g/m² beträgt, und/oder, die Zugfestigkeit des schlagzähen Nanokohlenstoff-Materials über 10 MPa, vorzugsweise über 90 MPa und insbesondere über 200 MPa beträgt, und der Modul des schlagzähen Nanokohlenstoff-Materials über 10 GPa, vorzugsweise über 30 GPa und insbesondere über 60 GPa beträgt, und/oder die tolerierbare Temperatur des schlagzähen Nanokohlenstoff-Materials von der Temperatur von flüssigem Stickstoff bis 500°C reicht.

11. Anwendung nach Anspruch 3, **dadurch gekennzeichnet, dass** die Spannung des Kohlenstoffnanoröhrenfilms gleich oder höher als 10 MPa ist, die Dehnung des Kohlenstoffnanoröhrenfilms gleich oder höher als 2 % ist, der absolute Wert der Differenz zwischen der Zugspannung in der Längsrichtung und der Zugspannung in der Breitenrichtung kleiner oder gleich 20 % der Zugspannung in der Längsrichtung oder in der Breitenrichtung ist, und der Absolutwert der Differenz zwischen der Bruchdehnung in der Längsrichtung und der Bruchdehnung in der Breitenrichtung kleiner oder gleich 10 % der Bruchdehnung in der Längsrichtung oder in der Breitenrichtung ist, und/oder die Dicke des Kohlenstoffnanoröhrenfilms kleiner oder gleich derjenigen des weichen Grundgewebes ist, und/oder das weiche Grundgewebe aus Hochleistungsfasern gebildet ist, wobei die Festigkeit der Hochleistungsfasern gleich oder größer als 2.0GPa beträgt, der Modul der Hochleistungsfasern gleich oder höher als 80GPa ist und die Dehnung der Hochleistungsfasern 3-5% beträgt.

12. Anwendung nach Anspruch 2, **dadurch gekennzeichnet, dass** die Kohlenstoffnanoröhrenanordnung ein Kohlenstoffnanoröhrenfilm ist, die Festigkeit des Kohlenstoffnanoröhrenfilms in der Orientierungsrichtung der Grundeinheiten des Kohlenstoffnanoröhrenfilms 50MPa-12GPa und vorzugsweise 120MPa-1 GPa beträgt und die Festigkeit des Kohlenstoffnanoröhrenfilms in der Richtung senkrecht zur Orientierungsrichtung der Grundeinheiten 30MPa-10GPa und vorzugsweise 60MPa-800MPa beträgt, und/oder die Zugfestigkeit der Monofilamente des Gewebes mehr als 22CN/dtex und vorzugsweise mehr als 35CN/dtex beträgt, und/oder wobei das Gewebe ein Hochleistungsfasergewebe ist, wobei die Oberflächendichte des Hochleistungsfasergewebes 35-220g/m² und vorzugsweise 120-160g/m² beträgt, und/oder wobei das Hochleistungsfasergewebe durch Hochleistungsfasern gebildet wird, die jeder Typ oder die Kombination von mehr als zwei Typen von UHMWPE-Fasern, Aramidfasern und Poly-p-phenylenbenzobisthiazolfasern sein können.

13. Anwendung nach Anspruch 2, **dadurch gekennzeichnet, dass** das stoßfeste Nanokohlenstoffmaterial mindestens zwei gestapelt angeordnete Gewebelagen umfasst, wobei zwischen jeweils zwei benachbarten Gewebelagen mindestens eine Kohlenstoff-Nanoröhrenanordnung verteilt ist,
und/oder mindestens zwei Kohlenstoff-Nanoröhren-Baugruppen in einem gestapelten Modus angeordnet sind, wobei mindestens eine Gewebelage zwischen jeweils zwei benachbarten Kohlenstoff-Nanoröhren-Baugruppen angeordnet ist, und die Kohlenstoff-Nanoröhren-Baugruppen folienartig sind.

14. Anwendung nach Anspruch 13, **dadurch gekennzeichnet, dass** jeweils zwei benachbarten Stoffschichten beide Vliesstoffe sind und der eingeschlossene Winkel zwischen der Kettorientierungsrichtung einer Stoffschicht und der Kettorientierungsrichtung der anderen Stoffschicht 0-180 Grad und vorzugsweise 45-135 Grad beträgt, oder die Orientierungsrichtung der Grundeinheiten in mindestens einer Kohlenstoffnanoröhrenanordnung, die zwischen jeweils zwei benachbarten Stoffschichten verteilt ist, dieselbe ist wie die Kettorientierungsrichtung mindestens einer Stoffschicht, und der Stoff ein Vliesstoff ist.

15. Anwendung nach Anspruch 3, **dadurch gekennzeichnet, dass** aus den stichfesten Verbundwerkstoffen eine stichfeste Struktur hergestellt wird, die N Untereinheiten umfasst, die gestapelt angeordnet sind, wobei jede Untereinheit den stichfesten Verbundwerkstoff umfasst und N ein ganzzahliges Vielfaches von vier ist, dann in jeweils zwei benachbarten Untereinheiten, die Grundeinheiten der Kohlenstoff-Nanoröhren-Baugruppen in einer Untereinheit in einem orientierten Modus in der ersten Richtung angeordnet sind, die Grundeinheiten der Kohlenstoff-Nanoröhren-Baugruppen in der anderen Untereinheit in einem orientierten Modus in der zweiten Richtung angeordnet sind, der eingeschlossene Winkel zwischen der ersten Richtung und der zweiten Richtung 0-180 Grad und vorzugsweise 45-135 Grad beträgt.

## Revendications

1. Application d'assemblages de nanotubes de carbone à la préparation d'un matériau nanocarboné résistant aux chocs, **caractérisée en ce que** l'assemblage de nanotubes de carbone est une macrostructure munie d'au moins une surface continue, une pluralité de nanotubes de carbone sont densément distribués dans la surface continue, au moins des segments partiels d'au moins une partie des multiples nanotubes de carbone s'étendent continuellement dans la surface continue, l'assemblage de nanotubes de carbone comprend une pluralité d'unités de base qui sont distribuées selon un mode orienté, et chaque unité de base comprend une structure de surface bidimensionnelle qui est formée par une pluralité de nanotubes de carbone entrelacés, les multiples unités de base sont distribuées de manière dense dans au moins une surface continue en parallèle, ainsi l'ensemble de nanotubes de carbone est sous une forme macro-ordonnée, et les multiples nanotubes de carbone dans chaque unité de base sont entrelacés de manière désordonnée, ainsi l'ensemble de nanotubes de carbone est sous une forme micro-désordonnée.

2. Application selon la revendication 1, **caractérisée en ce que** le matériau nanocarboné résistant aux chocs est un matériau composite pare-balles, et le matériau composite pare-balles comprend:
au moins un assemblage de nanotubes de carbone ; et un tissu, dans lequel la surface d'au moins un côté du tissu est recouverte d'au moins un assemblage de nanotubes de carbone.

3. Application selon la revendication 1, **caractérisée en ce que** le matériau résistant aux chocs en nanocarboné est un matériau composite antistatique, et le matériau composite antistatique comprend:
au moins un ensemble de nanotubes de carbone, dans lequel l'ensemble de nanotubes de carbone comprend un film de nanotubes de carbone formé par une pluralité de nanotubes de carbone étroitement rassemblés; et
un tissu de base souple, dans lequel la surface d'au moins un côté du tissu de base souple est recouverte d'au moins un film de nanotubes de carbone.

4. Application selon la revendication 1, **caractérisée en ce que** chacun d'au moins deux ensembles de nanotubes de carbone disposés en mode empilé est d'une macrostructure de surface bidimensionnelle, et au moins un ensemble de nanotubes de carbone comprend une pluralité d'unités de base qui sont distribuées dans un mode orienté dans la première direction, l'autre ensemble de nanotubes de carbone comprend une pluralité d'unités de base qui sont distribuées dans un mode orienté dans la deuxième direction, et l'angle inclus entre la première direction et la deuxième direction est de 0-180 degrés et de préférence est de 45-135 degrés.

5. Application selon la revendication 1, **caractérisée en ce que** de multiples continuums de nanotubes de carbone sont déposés en continu sur au moins une surface continue et ensuite compactés, de sorte que les multiples unités de base sont formées, chaque continuum de nanotubes de carbone est formé par une pluralité de nanotubes de carbone entrelacés et est d'une structure spatiale bidimensionnelle ou tridimensionnelle fermée, semi-fermée ou ouverte avant d'être compactée, et les continuums de nanotubes de carbone sont préparés par le procédé de craquage catalytique flottant.

6. Application selon la revendication 1, **caractérisée en ce que** les périphéries longitudinales de chaque deux unités de base adjacentes peuvent être espacées l'une de l'autre, ou être adjacentes l'une à l'autre ou se chevaucher l'une l'autre.

7. Application selon la revendication 1, **caractérisée en ce que** tous les deux assemblages de nanotubes de carbone adjacents sont directement liés ensemble ; ou une couche de matériau de liaison est en outre disposée entre tous les deux assemblages de nanotubes de carbone adjacents, ou un fluide épaississant le cisaillement est injecté entre tous les deux assemblages de nanotubes de carbone adjacents.

8. Application selon la revendication 1, **caractérisée en ce que** le matériau nanocarboné résistant aux chocs comprend en outre l'assemblage d'une pluralité de feuilles de graphène, et au moins un assemblage de nanotubes de carbone et au moins un assemblage de feuilles de graphène multiples sont d'une macrostructure de surface bidimensionnelle et sont disposés en mode empilé.

9. Application selon la revendication 1, **caractérisée en ce que** l'assemblage de nanotubes de carbone est pourvu d'une structure poreuse, le diamètre des pores de la structure poreuse est de 10nm-200nm, et la porosité de la structure poreuse est de 10%-60%, et/ou, le diamètre des tubes des nanotubes de carbone est de 2-100nm, et/ou, la teneur des nanotubes de carbone dans l'assemblage de nanotubes de carbone est supérieure à 99% en poids, et/ou, au moins un assemblage de nanotubes de carbone est un film de nanotubes de carbone autoportant.

10. Application selon la revendication 1, **caractérisée en ce que** le matériau résistant aux chocs en nanocarboné est d'une structure souple en film ou en feuille sur l'ensemble, et/ou, l'épaisseur du matériau résistant aux chocs en nanocarboné est de 1-100µm et de préférence est de 5-15µm, et/ou, la densité de surface du matériau résistant aux chocs en nanocarboné est de 2-20g/m² et de préférence est de 5-10g/m², et/ou, la résistance à la traction du matériau résistant aux chocs en nanocarboné est supérieure à 10 MPa, de préférence supérieure à 90 MPa et en particulier supérieure à 200 MPa, et le module du matériau résistant aux chocs en nanocarbone est supérieur à 10 GPa, de préférence supérieur à 30 GPa et en particulier supérieur à 60 GPa, et/ou, la température tolérable du matériau résistant aux chocs en nanocarbone est comprise entre la température de l'azote liquide et 500°C.

11. Application selon la revendication 3, **caractérisée en ce que** la contrainte du film de nanotubes de carbone est égale ou supérieure à 10MPa, l'allongement du film de nanotubes de carbone est égal ou supérieur à 2%, la valeur absolue de la différence entre la contrainte de traction dans le sens de la longueur et la contrainte de traction dans le sens de la largeur est inférieure ou égale à 20% de la contrainte de traction dans le sens de la longueur ou dans le sens de la largeur, et la valeur absolue de la différence entre l'allongement à la rupture dans la direction de la longueur et l'allongement à la rupture dans la direction de la largeur est inférieure ou égale à 10 % de l'allongement à la rupture dans la direction de la longueur ou dans la direction de la largeur, et/ou l'épaisseur du film de nanotubes de carbone est inférieure ou égale à celle du tissu de base souple, et/ou le tissu de base souple est formé de fibres à haute performance, la résistance des fibres à haute performance étant égale ou supérieure à 2. 0GPa, le module des fibres à haute performance est égal ou supérieur à 80GPa, et l'allongement des fibres à haute performance est de 3-5%.

12. Application selon la revendication 2, **caractérisée en ce que** l'assemblage de nanotubes de carbone est un film de nanotubes de carbone, la résistance du film de nanotubes de carbone dans la direction d'orientation des unités de base du film de nanotubes de carbone est de 50MPa-12GPa et de préférence de 120MPa-1 GPa, et la résistance du film de nanotubes de carbone dans la direction perpendiculaire à la direction d'orientation des unités de base est de 30MPa-10GPa et de préférence de 60MPa-800MPa, et/ou la résistance à la traction des monofilaments du tissu est supérieure à 22CN/dtex et de préférence est supérieure à 35CN/dtex, et/ou dans lequel le tissu est un tissu de fibres à haute performance, dans lequel la densité de surface du tissu de fibres à haute performance est de 35-220g/m² et de préférence est de 120-160g/m², et/ou dans lequel le tissu de fibres à haute performance est formé par des fibres à haute performance qui peuvent être n'importe quel type ou la combinaison de plus de deux types de fibres UHMWPE, de fibres d'aramide et de fibres de poly-p-phénylène ben-zobisthiazole.

13. Application selon la revendication 2, **caractérisée en ce que** le matériau nanocarboné résistant aux chocs comprend au moins deux couches de tissu disposées en mode empilé, dans lequel au moins un assemblage de nanotubes de carbone est réparti entre toutes les deux couches de tissu adjacentes,
et/ou, au moins deux assemblages de nanotubes de carbone disposés en mode empilé, dans lesquels au moins une couche de tissu est répartie entre deux assemblages de nanotubes de carbone adjacents,
et les assemblages de nanotubes de carbone sont filmés.

14. Application selon la revendication 13, **caractérisée en ce que** toutes les deux couches adjacentes de tissu sont toutes deux un tissu non tissé, et l'angle inclus entre la direction d'orientation de la cha ne d'une couche de tissu et la direction d'orientation de la cha ne de l'autre couche de tissu est de 0 à 180 degrés et de préférence est de 45 à 135 degrés, ou la direction d'orientation des unités de base dans au moins un ensemble de nanotubes de carbone distribué entre toutes les deux couches adjacentes de tissu est la même que la direction d'orientation de la cha ne d'au moins une couche de tissu, et le tissu est un tissu non tissé.

15. Application selon la revendication 3, dans laquelle une structure antistatique est préparée à partir des matériaux composites antistatiques et comprend N sous-unités qui sont disposées dans un mode empilé, dans laquelle chaque sous-unité comprend le matériau composite antistatique et N est un entier multiple de quatre, alors dans chaque deux sous-unités adjacentes, les unités de base des assemblages de nanotubes de carbone dans une sous-unité sont disposées dans un mode orienté dans la première direction, les unités de base des assemblages de nanotubes de carbone dans l'autre sous-unité sont disposées dans un mode orienté dans la deuxième direction, l'angle inclus entre la première direction et la deuxième direction est de 0 à 180 degrés et de préférence de 45 à 135 degrés.
